# EUROPÄISCHE PATENTANMELDUNG

(11) **EP 1 582 406 A1**
(43) Veröffentlichungstag der Anmeldung: **05.10.2005**
(21) Anmeldenummer: 05005565.6
(22) Anmeldetag: 15.03.2005
(51) Int. Cl.: B60R 5/00

(54) **Fahrradhalter und Fahrzeug mit Fahrradhalter**

(30) Priorität: 01.04.2004 DE 202004005126 U
(71) Anmelder: Hachenburg, Bruno, 81827 München (DE)
(72) Erfinder: Hachenburg, Bruno, 81827 München (DE)

(57) **Zusammenfassung**

Ein Fahrradhalter für den Innenraum eines Fahrzeugs wobei der Fahrradhalter mindestens einen Gabelhalter aufweist, welcher mindestens eine der beiden Augen der Fahrradgabel aufnimmt und fixiert, der Fahrradhalter im Bereich der Ladefläche platzierbar ist und der Gabelhalter an einem aus einem Profil bestehenden Grundhalter fixierbar ist,

Der Gabelhalter ist so ausgebildet, dass die Spannachse für die Fahrradgabel um einen Winkel nach links und rechts gegenüber der Längsachse des Grundhalters verstellbar und fixierbar und der Grundhalter zur Ableitung der auftretenden Kräfte zusätzlich mit mindestens einem Riegelelement gegen die Ladefläche spannbar ist.

Ferner wird ein PKW mit einem solchen Fahrradhalter beansprucht.

## Beschreibung

Die vorliegende Erfindung betrifft einen Fahrradhalter für den Innenraum eines Fahrzeugs entsprechend dem Oberbegriff vom Anspruch 1 sowie einen PKW mit einem für seinen Innenraum geeigneten Fahrradhalter.
Die Erfindung eignet sich besonders für PKW mit umlegbaren Rücksitzlehnen zur Vergrößerung der Ladefläche und einer Heckklappe zur Beladung, so genannten Tourenfahrzeugen mit den Bezeichnungen Touring oder Caravan. Fahrradhalter zum Transport von Fahrrädern auf dem PKW-Dach und im Heckbereich von Fahrzeugen sind bekannt und werden in diversen Formen angeboten.
Alle bekannten Fahrradhalter für den Innenraumtransport lassen sich nur an einem bestimmten Fahrzeug- Element befestigen, ein Wechsel auf ein anderes Fahrzeug-Element ist nicht möglich.

Die für den Fahrradtransport im Innenraum von Tourenfahrzeugen bekannten Halter beanspruchen die Fläche beider umgelegter Rücksitzlehnen des Fahrzeugs.

Aufgabe der vorliegenden Erfindung ist es, die Nachteile des Standes der Technik zu vermeiden und insbesondere einen Fahrradhalter zum sicheren Transport von Fahrrädern vorzustellen, der preisgünstig herstellbar, in handliche Teile zerlegbar und gegebenenfalls dauerhaft im Fahrzeug, bevorzugt unter der Ladefläche, mitgeführt werden kann.
Zur Lösung dieser Aufgabe zeichnet sich der erfindungsgemäße Fahrradhalter dadurch aus, dass der Gabelhalter (2) so ausgebildet ist, dass die Spannachse für die Fahrradgabel um einen Winkel nach links und rechts gegenüber der Längsachse des Grundhalters (1) verstellbar und fixierbar ist und der Grundhalter (1) zur Ableitung der auftretenden Kräfte zusätzlich mit mindestens einem Riegelelement (9, 109, 209, 309) gegen die Ladefläche spannbar ist.

Der Gabelhalter ist an einem Grundhalter verschiebbar, schwenkbar und fixierbar. Der Grundhalter besteht aus einem Profil und ist zur Ableitung der auftretenden Kräfte zusätzlich mit mindestens einem Riegelelement gegen die PKW-Ladefläche spannbar und die Riegelelemente sind wahlweise an verschiedenen serienmäßig im Fahrzeug vorhandenen Einrichtungen fixierbar.

Erfindungsgemäß wird also der Fahrradhalter bevorzugt an serienmäßig vorhandenen Einrichtungen des Fahrzeugs befestigt, welche im gewählten Fahrzeugzustand für den ursprünglichen Zweck nicht genutzt werden oder zur Befestigung von Ladegut vorgesehen sind.

Durch konsequente Anwendung von Produkten, welche in großen Mengen mit niedrigen Toleranzen hergestellt und am Markt kostengünstig angeboten werden kann erfindungsgemäß ein günstiger Herstellungspreis bei hohem Anwendernutzen erreicht werden.
Der Fahrradhalter ist durch die Wählbarkeit der serienmäßig in den Fahrzeugen vorhandenen Fixiereinrichtungen in allen bekannten Fahrzeugen des Typs Caravan oder Touring aller Hersteller nutzbar. Innerhalb eines bestimmten Fahrzeugs kann die jeweils günstigste Fixiereinrichtung für die Transportaufgabe ausgewählt werden. Zusätzlich kann der Fahrradhalter in Längsrichtung des Fahrzeugs zur Optimierung der Fahrradposition im Fahrzeug verstellt und fixiert werden. Bei keinem der bekannten Fahrradhalter ist eine Verschiebung des gesamten Halters in Längsrichtung des PKW zur Optimierung der Fahrrad-Befestigungspunkte im Fahrzeug möglich.

Der Fahrradhalter lässt sich auch in Fahrzeugen des Typs Van oder Transporter verwenden.
Zur bevorzugten Befestigung des Fahrradhalters auf der Ladefläche wird der Sicherheits-Einrastmechanismus der umklappbaren Rücksitzlehne benutzt. Hierzu wird der Einrast-Mechanismus der Rücksitzlehnen mit einem hakenförmigen Zuganker des Fahrradträgers arretiert und anschließend der Fahrradträger mit dem gleichen Zuganker gegen die Ladefläche des Fahrzeugs gespannt.
Weitere Fixiermöglichkeiten des Fahrradhalters sind vorgesehen an unter dem Ladeboden versenkt angeordneten Halterungen für demontierte Sitze, an den im Laderaum vorhandenen Verzurrösen, an eventuell im Laderaum vorhandenen verschiedenen Nutprofilen und an einer evtl. vorhandenen Kindersitz-Sicherung auf der Rückseite der umlegbaren Rücksitzlehne.
Eine besondere Fixiermöglichkeit des Fahrradhalters ist die Befestigung an einer Halterung für ein Laderaum-Rollo, welche an einer umlegbaren Rücksitzlehne vorhanden sein kann.
Hiermit ist der Transport eines Fahrrades auf der teilweise vergrößerten Ladefläche und der gleichzeitige Transport einer Person auf einem Rücksitz möglich
(Ein Laderaum-Rollo dient zur Trennung des Laderaums vom Fahrgastraum und wird von diversen Fahrzeugherstellern für Fahrzeuge der beschriebenen Typen angeboten.)
Weitere Fixiermöglichkeiten des Fahrradhalters bieten zusätzlich in das Fahrzeug eingebaute Elemente, zum Beispiel im Zwischenraum zwischen den beiden umklappbaren Rücksitzlehnen.
Zur Befestigung der Fahrradgabel im Gabelhalter wird das Prinzip der an sich bekannten Exzenter-Schnellklemmung für die Räder im Fahrradrahmen benutzt, allerdings ergänzt um zusätzliche einstellbare und fixierbare Verstellelemente, welche den Befestigungsvorgang beschleunigen und sicherer machen.

Zur bevorzugten Nutzung der Erfindung wird das demontierte Vorderrad mit einem einfachen Spanngurt oder Klettverschlussband am fixierten Fahrradrahmen befestigt.
Alternativ können Vorderrad und Sattel in speziellen Aufnahmen fixiert werden, welche am Fahrradhalter verstellbar befestigbar sind.
Der Fahrradhalter lässt sich vorzugsweise mit nur einem mitgelieferten Werkzeug zerlegen und zu einem handlichen Bündel zusammenfügen. Die Ablage dieses Bündels kann im Regelfall unter dem Ladeboden des Fahrzeugs im Bereich des Reserverades erfolgen. Es sind keine Fahrradhalter bekannt, welche zusammengelegt werden und so an geeigneter Stelle ständig im Fahrzeug mitgeführt werden können.
Besonders bevorzugte Anspruchsformen der Erfindung sind den Unteransprüchen zu entnehmen.
Grundsätzlich ist der Gegenstand auch geeignet zur Befestigung von Fahrrädern in anderen als den ausdrücklich genannten Fahrzeugen sowie zur Präsentation oder Aufbewahrung von Fahrrädern.
Die Erfindung wird näher erläutert anhand von Ausführungsbeispielen unter Bezugnahme auf die Zeichnungen.

Die Erfindung wird nachfolgend anhand von Bauteilen mit den Bezugszeichen 1 bis 88 beschrieben. Die Beschreibung von weiteren Ausführungsformen, deren Bauteile denen der erstgenannten Bauteile in der Funktion entsprechen und weitgehend gleiche Abmessungen haben, werden mit den gleichen Bezugszeichen beschrieben, jedoch um die Grundzahl 100 erhöht.
Es versteht sich, dass die Beschreibungen für Bauteile mit gleichen Endziffern gelten, es sei denn, dass etwas Gegenteiliges zum Ausdruck gebracht wird.
Diese Konvention wird auch bei späteren Ausführungsformen angewendet, bei welchen die Grundzahl um weitere 100 erhöht wird.

**Die Erfindung wird nachfolgend anhand von Ausführungsbeispielen näher erläutert anhand der Zeichnung in welcher zeigen:**
- Fig.1: eine schematische Darstellung eines im Gepäckraum eines Pkws erfindungsgemäß untergebrachtes Fahrrad,
- Fig.2: eine Draufsicht auf zwei im Gepäckraum eines Pkws erfindungsgemäß untergebrachte Fahrräder,
- Fig. 3: verschiedene Verstellmöglichkeiten eines erfindungsgemäßen Fahrradhalters,
- Fig. 4: eine teilweise geschnittene erfindungsgemäße Gabelhalterung,
- Fig. 5A bis 5C: Details der erfindungsgemäßen Gabelhalterung der Fig. 4,
- Fig. 6: eine weitere Variante einer erfindungsgemäßen Gabelhalterung,
- Fig. 7: noch eine weitere Variante einer erfindungsgemäßen Gabelhalterung,
- Fig. 8A bis 8C: drei verschiede erfindungsgemäß anwendbare Fixierungen
- Fig. 9A bis 9Q: einen Überblick über handelsübliche Nutprofile und dazu passende Nutensteine, wie sie erfindungsgemäß anwendbar sind,
- Fig. 10A bis 10F: einen Fahrradhalter, dessen Wirkfläche sich erfindungsgemäß einfach ändern lässt,
- Fig. 11A bis 11C: einen erfindungsgemäßen Fahrradhalter dessen Grundhalter in seiner Länge aus mehreren Profilteilen besteht,
- Fig. 12A bis 12C: die erfindungsgemäße Nutzung des Sicherheits- Einrastmechanismus der umlegbaren Rücksitzlehne,
- Fig. 13A bis 13C: weitere erfindungsgemäßen Fixiermöglichkeiten des Grundhalters im Fahrzeug,
- Fig. 14A und 14B: die erfindungsgemäße Fixierung des Grundhalters an einer Kindersitzsicherung.
- Fig. 15A bis D: die erfindungsgemäße Fixierung des Grundhalters an Nutprofilen, welche sich serienmäßig im Laderaum befinden können.
- Fig. 16A bis D: einen Zuganker zur erfindungsgemäßen Befestigung des Grundhalters im PKW an unter der Ladefläche versenkten Halterungen mit engen Platzverhältnissen innerhalb der Versenkung.
- Fig. 17A bis E: weitere mögliche Formen des Riegelelements 109 und seine erfindungsgemäße Befestigung am Grundhalter direkt oder am Profilabschnitt 16.
- Fig. 18A und B: die erfindungsgemäße Fixierung des Grundhalters 1 mit Zugelement 7 an einer Rollohalterung.
- Fig. 19: das Zugelement 7 aus Fig. 18B in perspektivischer Darstellung.
- Fig. 20 A und B: einen einfachen Fahrradhalter bei erfindungsgemäßer Nutzung der in Fig, 18 dargestellten Technik.
- Fig. 21A bis D: die Verstellmöglichkeiten des erfindungsgemäßen Gabelhalters 2.
- Fig. 22A und B: eine Möglichkeit zur erfindungsgemäßen Anwendung eines einschwenkbaren Nutensteins.
- Fig. 23A bis C: eine andere erfindungsgemäße Möglichkeit einer Anordnung des Grundhalters 1 mit Profilabschnitten 16 und Gabelhalter 2.
- Fig. 24A und B: andere erfindungsgemäße Fixiermöglichkeiten des Grundträgers im PKW.
- Fig. 25A bis G: die vereinfachte Darstellung der verschiedenen erfindungsgemäßen Fixiermöglichkeiten auf den umgeklappten Rücksitzlehnen.
- Fig. 26A bis D: die Möglichkeiten, den Fahrradträger erfindungsgemäß zu zerlegen und in ein handliches Bündel zu verpacken.
- Fig. 27A bis D: die erfindungsgemäße Befestigung eines losen Vorderrades am Grundhalter 1, am Profilabschnitt 16 oder am Profilteil 33.
- Fig. 28A bis C: die erfindungsgemäße Befestigung eines Sattles mit Sattelstütze am Grundhalter 1, a am Profilabschnitt 16 oder am Profilteil 33.
- Fig. 29A und B: eine besondere Ausführungsform eines erfndungsgemäßen Nutensteins.
- Fig. 30: die Draufsicht auf die erfindungsgemäße Fixierung eines Fahrrads im Laderaum und gleichzeitig die Transportmöglichkeit einer Person auf einem nicht umgelegten Rücksitz.
- Fig. 31: die Seitenansicht zu Fig. 30
- Fig. 32: die Draufsicht auf die erfindungsgemäße Fixierung von zwei Fahrrädern bei Nutzung des in Fig. 30 gezeigten Farradträgers.
- Fig. 33A bis G: eine weitere Möglichkeit zur erfindungsgemäßen Veränderung der Wirkfläche des Fahrradhalters.
- Fig. 34: vereinfachte Darstellungen von erfindungsgemäßen Fixiermöglichkeiten des Fahrradhalters im hinteren Bereich eines Fahrzeugs.
- Fig. 35A bis E: erfindungsgemäße Fixierungen des Fahrradträgers im Bereich der Kopfstütze.
- Fig. 36A bis D: eine weitere Halterung für die erfindungsgemäße Fixierung des Fahrradhalters an Verzurrösen, welche an der Seitenwand des Gepäckraums angebracht sein können.

### Nachfolgend werden die Figuren detailliert erläutert:

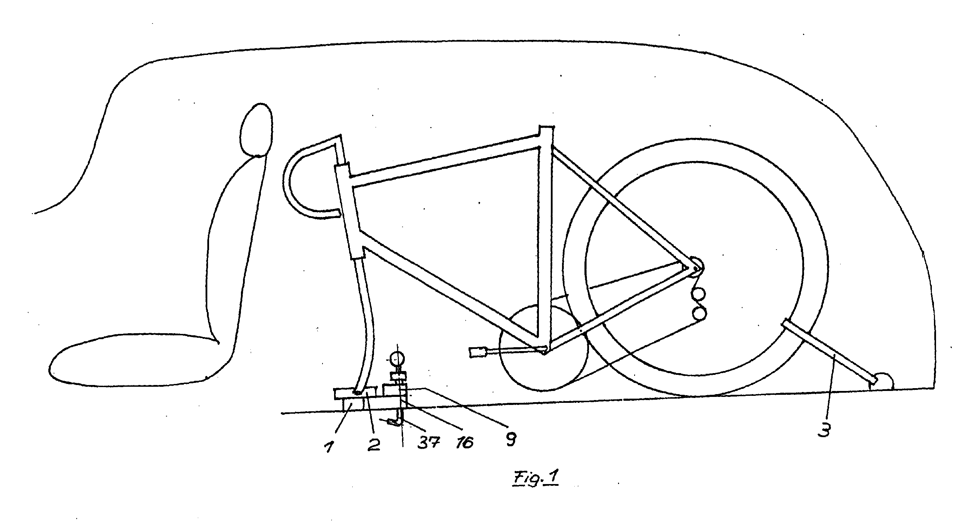

Fig.1 zeigt die Seitenansicht eines fixierten Fahrrads hinter dem PKW-Fahrersitz mit Grundhalter 1 und Gabelhalter 2 sowie Spanngurt 3 für das Fahrrad im PKW- Innenraum.
Das Fahrrad kann auch entgegen der Fahrtrichtung des PKW montiert sein, dies ändert nichts an der grundsätzlichen Anwendbarkeit der nachfolgenden Beschreibung.

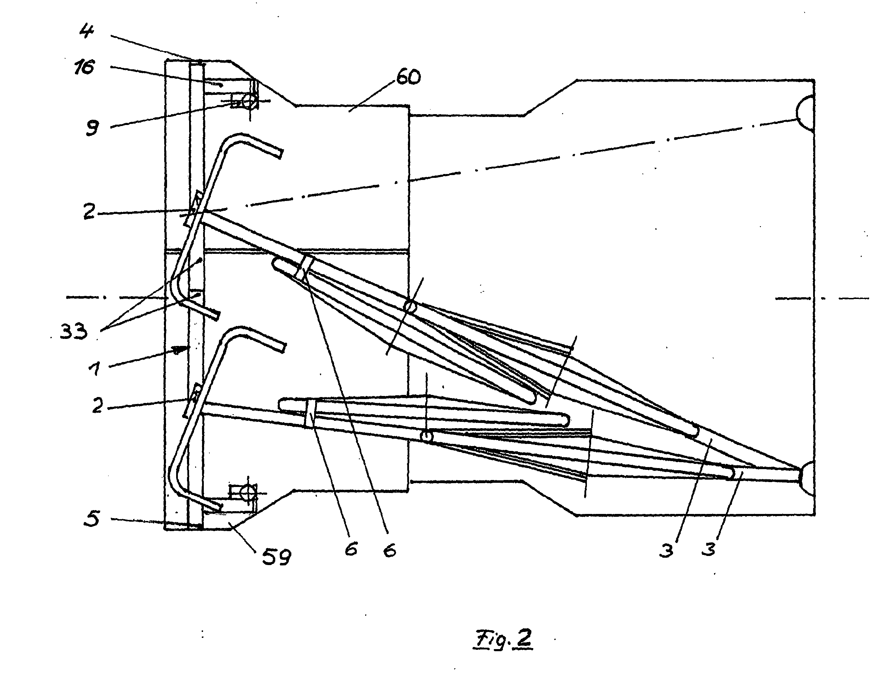

Fig. 2 zeigt die Aufsicht auf zwei montierte Fahrräder mit einem aus zwei an einander gereihten Profilabschnitten 33 bestehenden Grundhalter 1 sowie den beiden Gabelhaltern 2 in Funktion für die Fixierung der beiden Fahrräder. Der Grundhalter liegt auf beiden umgelegten Rücksitzlehen auf und ist über die Profilabschnitte 16 und die Riegelelemente 9 am PKW fixiert. Die Profilabschnitte 16 sind gegenüber dem Grundhalter 1 verschiebbar und fixierbar. Hierdurch sind die Positionen der Riegelelemente 9 gegenüber den Befestigungselementen im PKW quer zur Fahrtrichtung einstellbar.

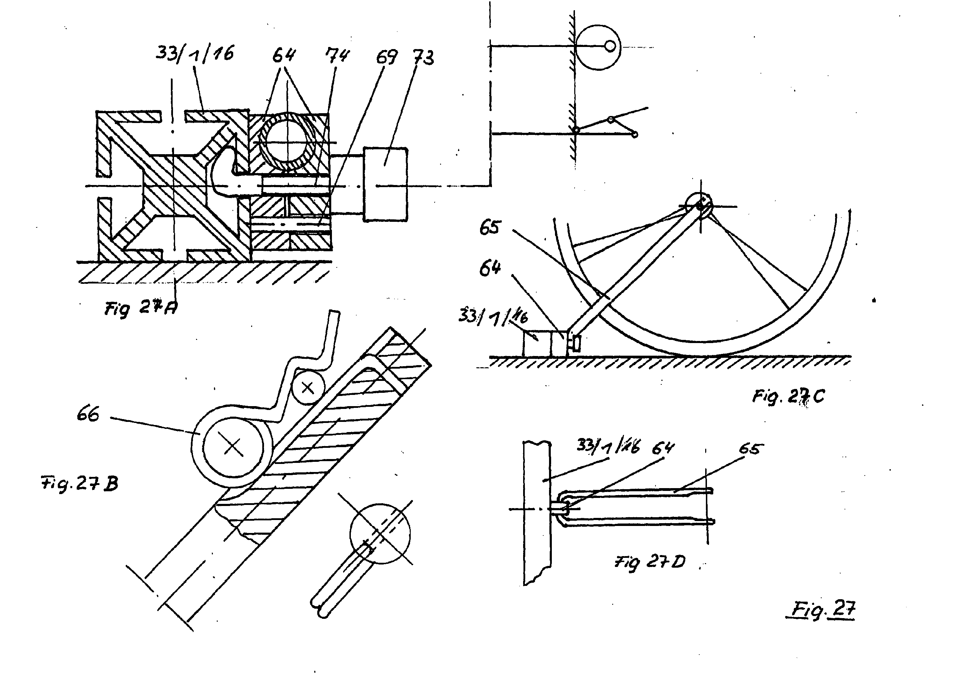

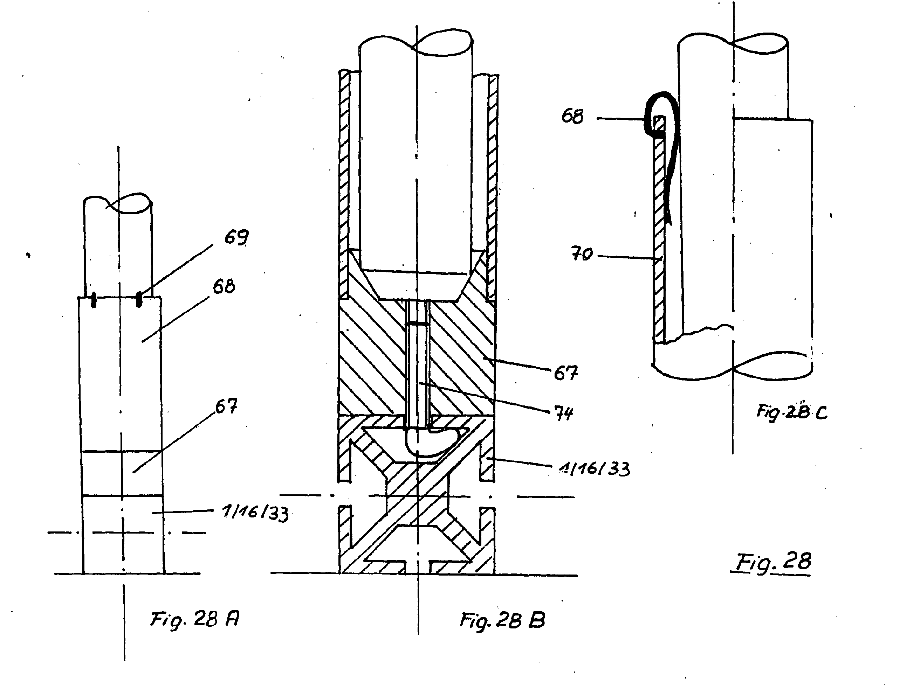

Zusätzlich sind die Positionen der Riegelelemente 9 gegenüber den Profilabschnitten 16 verschiebbar und fixierbar. Hierdurch ist die Position des Grundhalters 1 im PKW in Fahrtrichtung optimierbar. Bei keinem der bekannten Fahrradhalter ist eine Verschiebung des gesamten Halters in Längsrichtung des PKW zur Optimierung der Fahrrad-Befestigungspunkte im Fahrzeug möglich. Die losen Vorderräder sind mit je einem Spannband 6 an je einem fixierten Fahrrad befestigt. Falls die Fahrradsättel demontiert werden, können diese lose auf der Ladefläche zwischen den beiden fixierten Fahrrädern abgelegt werden. Alternativ sind die in den Fig. 27 und 28 beschriebenen Einrichtungen nutzbar.

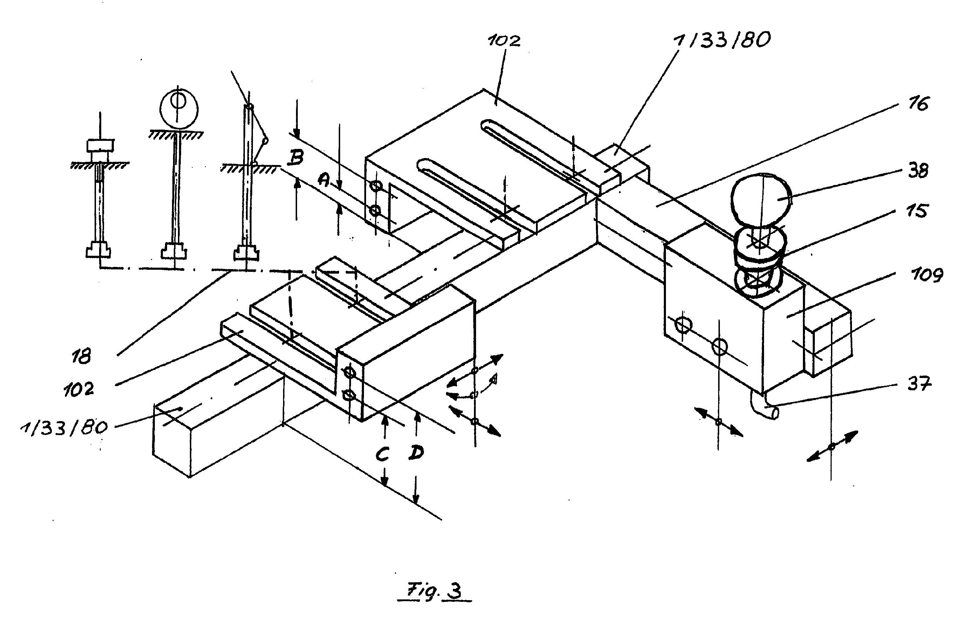

Fig. 3 zeigt ergänzend zu Fig. 2 weitere Verstellmöglichkeiten des Fahrradhalters und eine andere Ausführung der Gabelhalter 102.
Jeder der beiden gezeigten Gabelhalter 102 ist entweder in Fahrtrichtung vor oder hinter dem Grundhalter 1 montierbar. Weiterhin sind mindestens vier verschiedene Höhenpositionen der Fahrradgabel- Klemmung möglich (Maße A, B, C und D). Bei Wahl der Position A ist die volle Fahrzeughöhe für den Fahrradtransport nutzbar. Es lassen sich problemlos Fahrradgabeln mit Scheibenbremsen fixieren. Außerdem sind beide Gabelhalter 102 in Fahrtrichtung gegenüber dem Grundhalter 1 verschiebbar und fixierbar und zusätzlich lässt sich die Spanachse für die Fahrradgabel schwenken und fixieren.
Für die Vielzahl der Verstellmöglichkeiten sind die beiden Riegelelemente 18 nur zu lösen, der Gabelhalter lässt über seine beiden offenen Langlöcher und die hinterschnittenen Nuten im Grundhalterprofil 1 alle geschilderten Verstellungen zu.
Als Riegelelement 18 ist eine Schrauben-Muttern Verbindung möglich, wie links im Bild gezeigt. Außerdem sind eine Exzenter-Klemmung (Mitte) oder eine Kniehebel-Klemmung (rechts) möglich.
Mit je zwei Riegelelementen 18 kann der Gabelhalter 102 in anderen Anwendungsfällen auch gegen einen Profilabschnitt 16, gegen ein Profilteil 33 oder gegen eine Grundhalter- Verlängerung 80 verstellbar fixiert werden.
Bei Einstellung des Gabelhalters nach Maß A steht die volle Fahrzeughöhe für den Fahrradtransport zur Verfügung. Durch die Vielzahl der einfachen Verstellmöglichkeiten des Gabelhalters wird die raumsparende Unterbringung von mehr als einem Fahrrad im PKW erheblich erleichtert. Dies betrifft vor allem den Raumbedarf für die Fahrradlenker mit Lenkerzubehör im PKW.
Durch geeignete Modifikation der Gabelhalter 102 ist auch die Fixierung von Fahrrädern mit Steckachse möglich.
Durch eine andere Modifikation der Gabelhalter 102 ist die Fixierung von Fahrrädern möglich, welche an einem Lenker- Federbein eine Kragarm- Achse aufweisen.

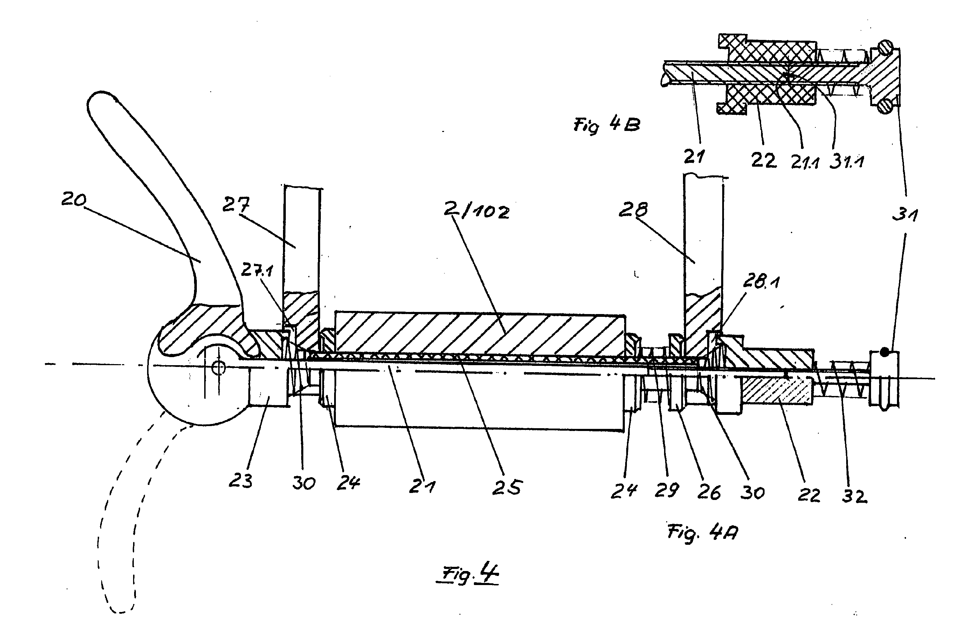

Fig. 4A und B zeigen einen Schnitt durch die Spannachse des Gabelhalters 2; 102 mit einstellbarer innerer Gabelbreite.
Hierbei ist mittels Verstellmutter 26 die Breite des Gabelhalters werkzeuglos an die innere Breite der zu spannenden Fahrradgabel angepasst. Durch die Axialspannung der Spiralfeder 29 bleibt die eingestellte Position der Verstellmutter 26 erhalten.
Fahrradgabeln haben zwar eine genormte innere Breite von 100 mm, tatsächlich sind wegen der erforderlichen Fertigungstoleranzen auch bei hochwertigen Fahrrädern Maße zwischen 97 und 103 mm anzutreffen. Durch Einstellung der tatsächlich vorhandenen inneren Breite des Fahrrads ist beim Spannvorgang der Fahrradgabel in den Gabelhalter 2; 102 das lästige Nachjustieren mittels Spannmutter 22 überflüssig. Diese Voreinstellung der inneren Gabelbreite bietet sich besonders dann an, wenn mit dem Fahrradträger in der gewählten Gabelhalter-Position immer das gleiche Fahrrad zu transportieren ist. Dies trifft für die weitaus meisten Anwendungsfälle zu. Außerdem lassen sich durch die Verstellbarkeit der Gabelhalter 2 auch Kinderfahrräder transportieren, bei welchen die innere Gabelbreite kleiner als die oben beschriebene Norm sein kann.
Nachfolgend wird eine weitere Eichrichtung beschrieben, mit deren Hilfe auch Fahrradgabeln mit einer Hinterschneidung einfach gespannt und gelöst werden können.
Die Hinterschneidungen der Fahrradgabeln dienen als so genannte Ausfallsicherung für das Vorderrad bei Mountainbikes und verhindern Unfälle, wenn sich die Exzenterspannung des Vorderrades in der Fahrradgabel bei Benutzung des Mountainbikes ungewollt öffnet.

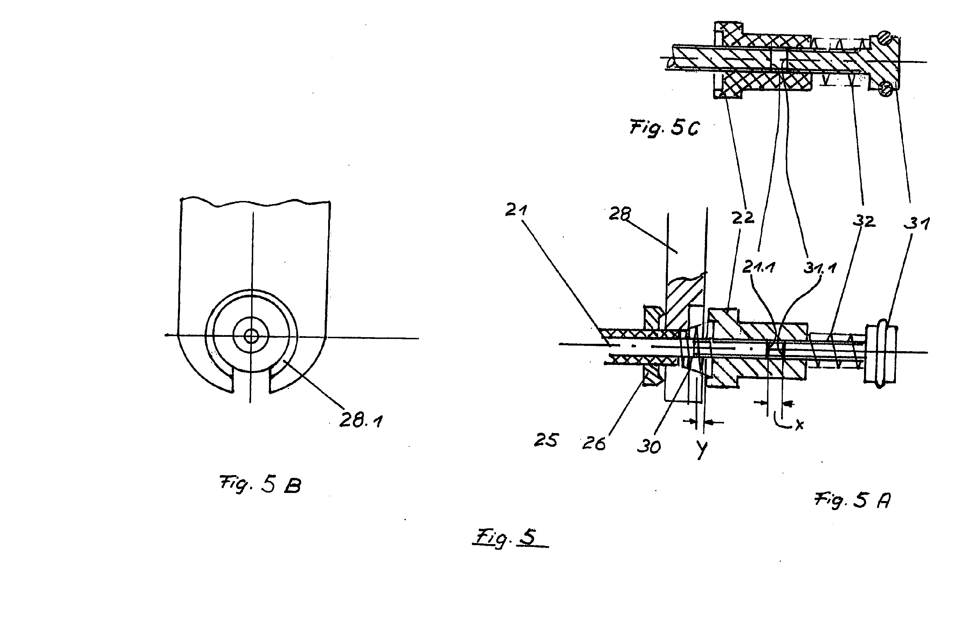

Für die nachfolgenden Erklärungen sind die Figuren 4 und 5 gemeinsam erforderlich:
Fig. 4 zeigt die Situation bei geöffnetem Exzenter 20. Trotzdem lässt sich die Fahrradgabel wegen der Hinterschneidungen der Fahrradgabelenden 28.1 und 27.1 noch nicht demontieren. Hierzu muss die Spannmutter 22 gelöst werden. Die Spannmutter 22 ist erfindungsgemäß besonders lang ausgebildet. Im hinteren Teil der Spannmutter befindet sich die Einstellschraube 31, welche mit der Spiralfeder 32 gegen unbeabsichtigte Veränderung gesichert ist.
In Fig. 4 ist der optimale Druckpunkt des Exzenters eingestellt; die Spannmutter 22 ist in Ausgangsposition. Es berühren sich die linke Planfläche 31.1 der Einstellschraube 31 und die rechte Planfläche 21.1 der Spannachse 21.

Fig. 5A bis C zeigen die Spannmutter22 gegenüber der Spannachse 21 nach rechts gelöst. Dabei hat sich die innerhalb der Spannmutter 22 fixierte Einstellschraube 31 mit nach rechts bewegt. Die linke Planfläche 31.1 der Einstellmutter 31 hat gegenüber der rechten Planfläche 21.1 der Spannachse 21 jetzt den Abstand (x). Gleichzeitig ist die Stellung der Spannmutter 22 um einen Betrag (y) gegenüber der Darstellung in Fig. 4 nach rechts verändert. (Wegen der Wirkung der beiden Spiralfedern 30 unter der rechten Fahrradgabelhälfte 28 und unter der linken Fahrradgabel-Hälfte 27 ist der Betrag (y) etwa halb so groß wie der Verstellweg (x).
Die Veränderung um den Betrag (y) ist erforderlich, um auch Fahrradgabeln mit Hinterschneidungen 27.1 und 28.1 demontierbar zu machen.
Mit der langen Spannmutter 22, der Einstellschraube 31 und der Spiralfeder 32 lässt sich der optimale Druckpunkt des Spannexzenters 20 sicher wiederholbar einstellen.
Um nun die gleiche Fahrradgabel erneut zu spannen, ist also folglich zunächst die Fahrradgabel in Spannposition zu bringen und danach die Spannmutter 22 so lange gegenüber der Spannachse 21 zu schließen, bis die linke Planfläche 31.1 der Einstellschraube 31 die rechte Planfläche 21.1 der Spannachse 21 wieder berührt. Der vorher eingestellte optimale Druckpunkt des Exzenters ist wieder hergestellt und der Exzenter wird geschlossen.

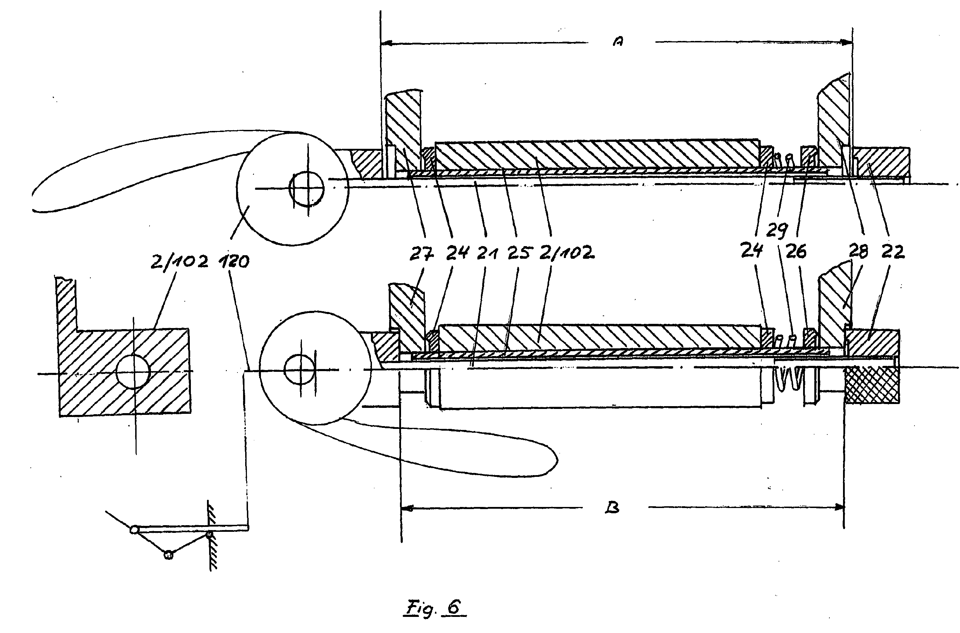

Fig. 6 zeigt eine Einrichtung, mit welcher auch hinterschnittene Fahrradgabeln ohne Bewegung der Spannmutter 22 sicher gespannt und gelöst werden können.
Es wird ein Exzenter 120 mit höherem Spannweg als beim Standard- Exzenter 20 eingesetzt. In der oberen Darstellung ist der Exzenter 120 geöffnet und ergibt Abstandsmaß (A) zwischen den Spannflächen. In der unteren Darstellung ist der Exzenter geschlossen mit Maß (B) zwischen den Spannflächen. Maß (A) minus Maß (B) ergibt circa 5 mm.
Hierdurch ist die Spannung aller Fahrradgabeln, auch Mountainbike-Fahrradgabeln mit Hinterschneidung möglich, ohne die Spannmutter 22 hierzu lösen zu müssen.
Damit dieser Spannexzenter 120 entgegen seiner Bestimmung nicht in einem Fahrrad angewendet werden kann, ragt die Hebelform des Exzenters 120 in geschlossener Stellung in den Speichenbereich des zu montierenden Vorderrades. Die bestimmungswidrige Anwendung des Spannexzenters 120 im Mountainbike ist somit weitestgehend ausgeschlossen und unbeabsichtigte Unfälle können hierdurch abgewendet werden. An Stelle des Exzenters 120 kann auch ein Kniehebel verwendet werden, wie unten links gezeichnet.

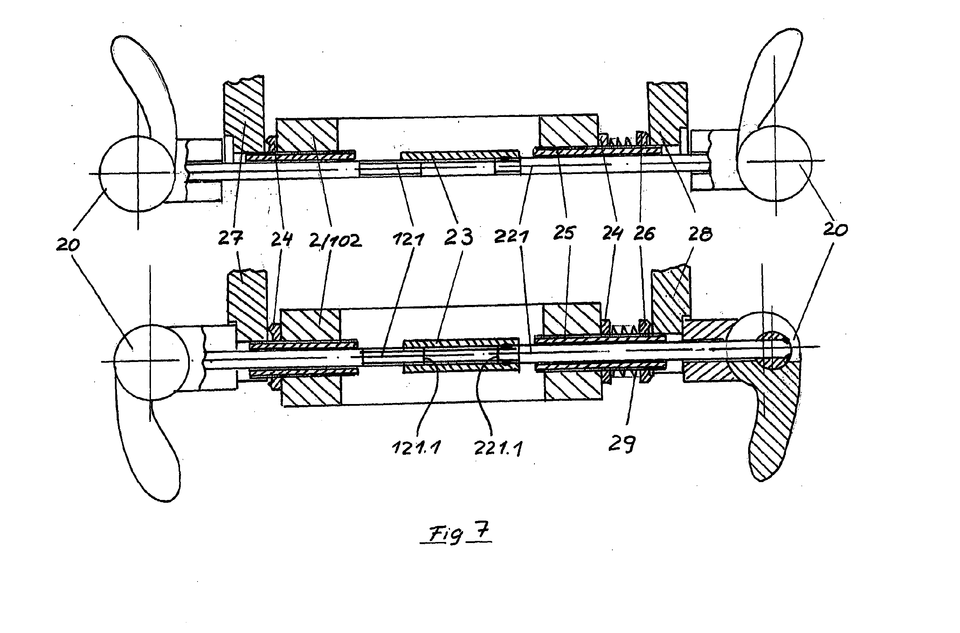

Fig.7 zeigt eine andere Ausführung des Gabelhalters 2/102 mit der gleichen Wirkung wie unter Fig. 6 beschrieben. Es werden an beiden Enden des Gabelhalters (2/102) je ein handelsüblicher Exzenter 20 mit der verkürzten Spannachse 121/221 verwendet.
Der optimale Druckpunkt der Spannung wird durch gegenseitige Drehung der beiden Exzenter 20 erreicht. Hierdurch verändert sich der Abstand zwischen der rechten Planfläche der Spannachse 121.1 und der linken Planfläche der Spannachse 221.1. Dabei wird die Spannachse 121.1 des linken Exzenters 20 innnerhalb des Zwischenstücks 24 axial verstellt. Die rechte Spannachse 221 ist mit dem Zwischenstück mit geeigneten Mitteln fest verbunden, beispielsweise mit einem Schraubensicherungsmittel oder einer Kontermutter. Bei dieser Lösung lassen sich Fahrradgabeln ohne Hinterschneidung durch Betätigen eines der beiden Exzenter spannen und lösen. Für Fahrradgabeln mit Hinterschneidung müssen jeweils beide Exzenter genutzt werden.

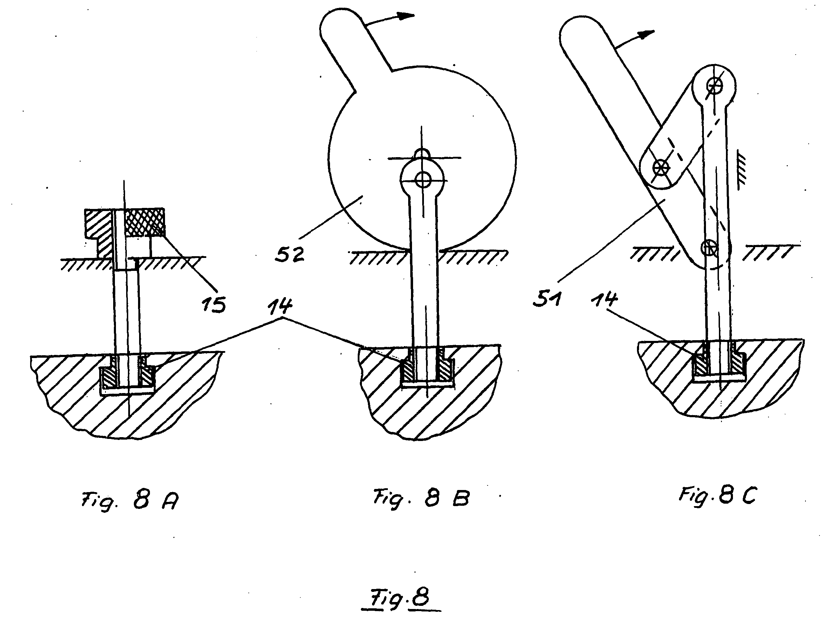

Fig. 8A bis C zeigen grundsätzlich die verschiedenen Möglichkeiten zur Erzeugung einer Fixierung. Fig.8B zeigt die in den vorher gezeigten Bildern angewendete und übliche Exzenterspannung welche in Fig. 6 links unten angedeutet ist. Selbstverständlich lässt sich die Fahrradgabel auch mit einem Kniehebel (Fig. 8C) oder mit einem Schrauben- Mutternsystem (Fig. 8A) spannen. Dies gilt auch für andere Fixieraufgaben dieser Erfindung.

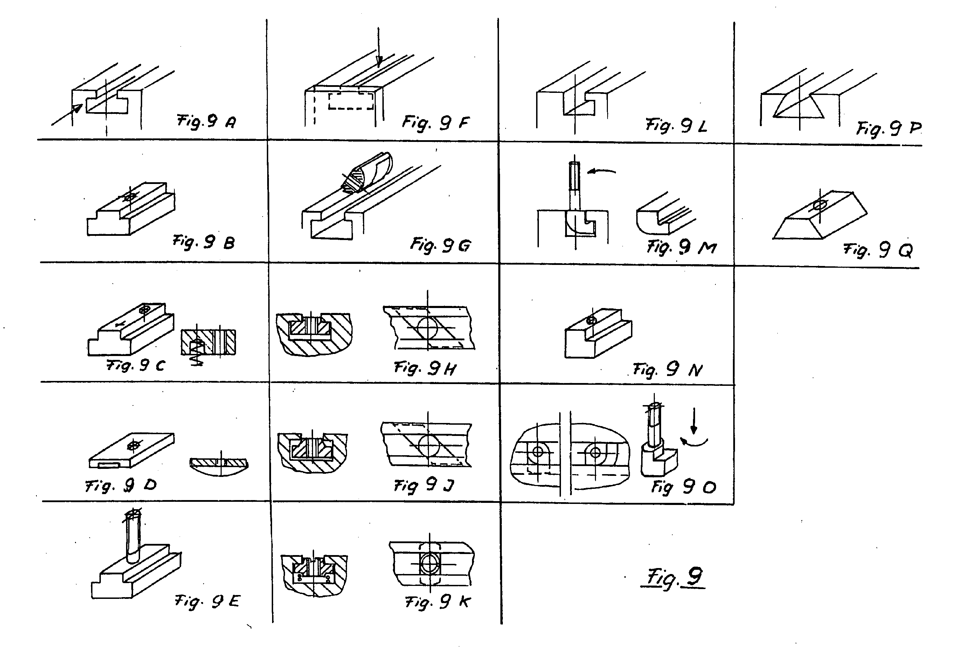

Fig. 9A bis Q zeigen einen Überblick über handelsübliche Nutprofile und dazu passende Nutensteine wie sie in dieser Erfindung anwendbar sind.
Dabei können die Nutensteine stirnseitig axial in die Nute eingeführt werden
(Nute nach Figur 9A mit Nutensteinen nach Figuren 9B, 9C, 9D 9E)
(Nute nach Figur 9L mit Nutenstein nach Figur 9N)
(Nute nach Figur 9P mit Nutenstein nach Figur 9Q)

Die Nutensteine können auch seitlich in die Nut eingeführt werden.
Entweder wird der Nutenstein mit einer Drehbewegung eingeführt
(Nute nach Figur 9F mit Nutenstein nach Figuren 9H, 9J und 9K)
(Nute nach Figur 9L mit Nutenstein nach Figur 90) oder der Nutenstein wird mit einer Schwenkbewegung eingeführt.
(Nute nach Figur 9F mit Nutenstein nach Figur 9G)
(Nute nach Figur 9L mit Nutenstein nach Figur 9M)
Die Fixierung anderer Elemente an den in der Nut verschiebbaren Nutensteinen ist mit den genannten Methoden möglich: Entweder über eine Muttern-Schraubenverbindung oder eine Exzenterspannung oder über eine Kniehebelspannung.
In den Figuren 9B, 9C, 9D, 9G, 9H, 9I, 9K, 9N und 9Q sind Beispiele für ein Gewinde im Nutenstein vorgesehen. In den Figuren 9E, 9M und 9O sind Gewindebolzen am Nutenstein befestigt.
Die Nutensteine lassen sich vorübergehend in Längsrichtung der Nute festlegen durch Federn, wie sie in Figuren 9C, 9D, 9G und 9K abgebildet sind.
Es ist auch eine dauerhafte Fixierung möglich durch Verformung und dadurch entstandenen Formschluss zwischen Nute und Nutenstein wie in Fig. 9J dargestellt.

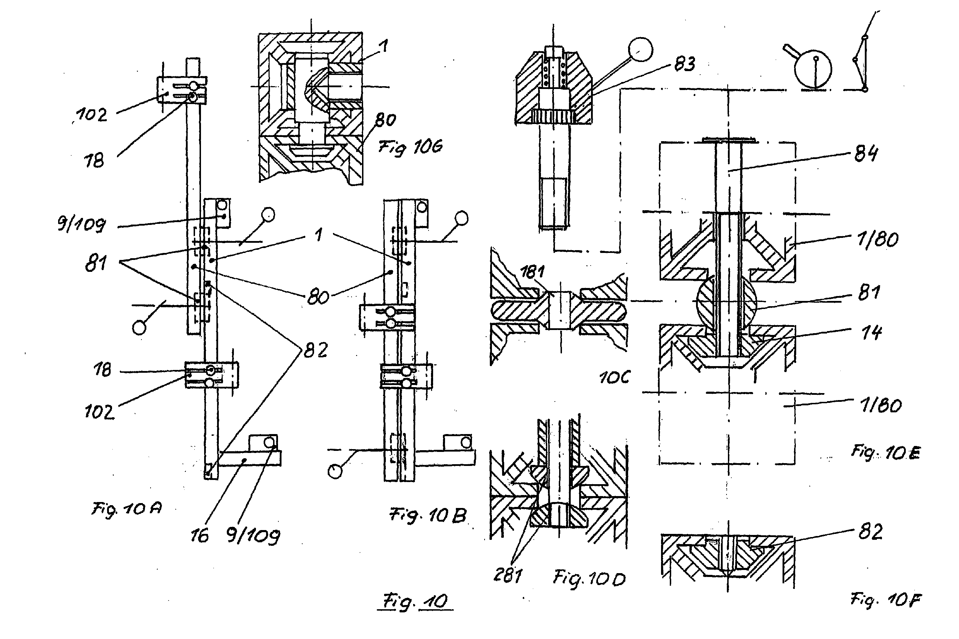

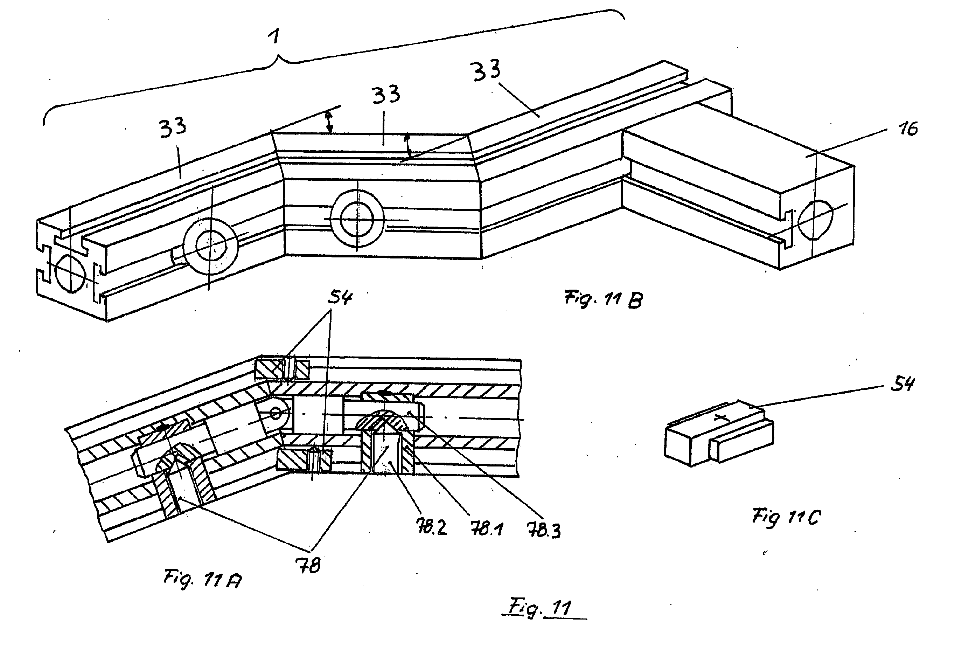

Fig. 10A bis G zeigen einen Fahrradhalter, dessen Wirkfläche sich einfach verändern lässt.
Hierzu ist eine Grundhalter-Verlängerung 80 parallel zum Grundhalter 1 verschiebbar. Dabei sind Gabelhalter 2/102 sowohl am Grundhalter 1 als auch an der Grundhalter-Verlängerung 80 verstellbar fixiert. Hierdurch wird die Wirkfläche des Fahrradhalters quer zur Fahrtrichtung des PKW erheblich verändert. Gleichzeitig bildet der zusammen geschobene Fahrradhalter eine kompakte Einheit.
Hierdurch kann er evtl. in diesem Zustand; auch bei Nichtbenutzung zum Fahrradtransport, dauerhaft im Fahrzeug mitgeführt werden, bevorzugt unter dem Ladeboden im Bereich des PKW-Reserverades.

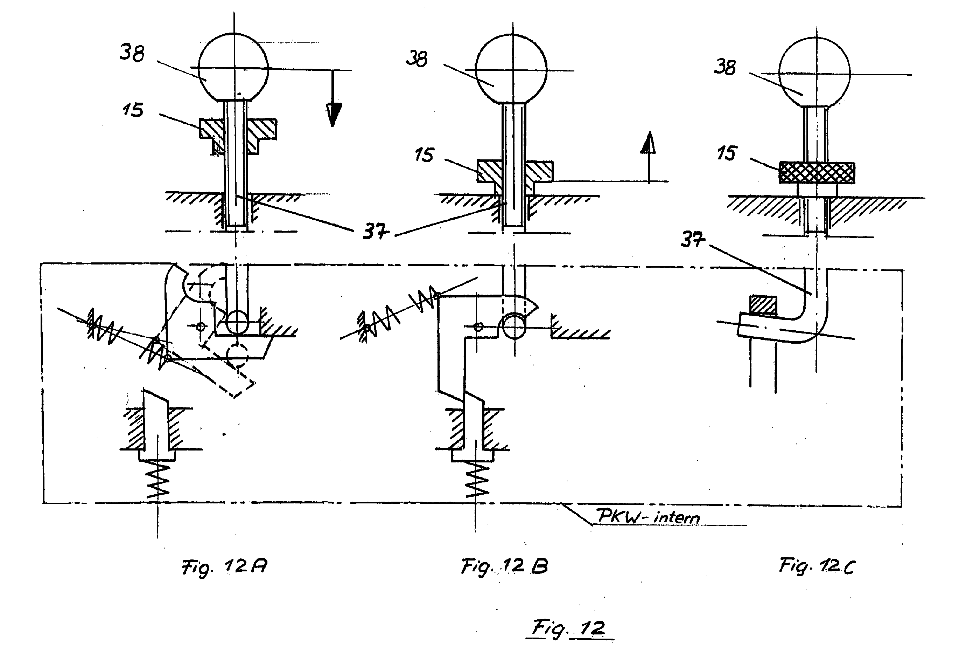

Durch Nutenstein-Anschläge 82 sind die beiden Extrempositionen zwischen Grundhalter 1 und Profilabschnitt 80 gesichert.
Durch Formstücke 81 im Bereich der Berührungsflächen von Grundhalter 1 und Grundhalter-Verlängerung 80 entsteht in Verbindung mit dem Riegelelement 84 für Grundhalter 1 und Grundhalter- Verlängerung 80 zwischen beiden Teilen ein Formschluss in Biegerichtung der beiden Teile. In Fig. 10E ist als einfachstes Formstück 81 ein Rundstangenabschnitt gezeigt. In Fig. 10C und 10D sind andere Ausführungsformen des Formstücks 181 gezeigt.
Durch Anwendung eines handelsüblichen, verstellbaren Spannhebels 83 kann der auf 180 Grad eingeschränkte Spannweg optimal genutzt werden. Bei diesem Spannhebel kann durch axialen Zug gegen eine Spiralfeder die Verzahnung zwischen Hebelgriff und Schraube vorübergehend gelöst werden, danach der Griff radial um einen bestimmten Winkel verstellt werden und über die zuvor genannte Feder wird die Verzahnung wieder verbunden. Selbstverständlich sind auch hier statt der beschriebenen Mutter-Schraubenkombination entweder Kniehebel- oder Exzenterelemente einsetzbar. Zusätzlich ist die Nutzung eines Standardelements möglich, siehe Fig. 10G. In den Fig. 11A, 17B und 23B ,ist die Funktion näher erläutert.
Die Riegelelemente 9 können an beiden Seiten des Grundhalters 1 vorgesehen sein. Es kann jedoch auch an den beiden gegenüberliegenden Enden des Grundhalters 1 und der Grundhalter-Verlängerung 80 je ein Riegelelement 9 vorhanden sein. Hierzu kann einer oder mehrere der nachfolgend beschriebenen Fixierpunkte im PKW genutzt werden. Wahlweise kann die Nutzung eines Profilabschnitts 16 zwischen Grundhalter und Riegelelement 9/109 oder zwischen Grundhalter-Verlängerung 80 und Riegelelement 9/109 vorgesehen sein oder auch nicht vorgesehen sein. Der Einsatz des Profilabschnitts 16 ist immer dann empfehlenswert, wenn hierdurch die Position der Gabelhalter 2/102 gegenüber dem zur Verfügung stehenden FahrzeugInnenraum optimierbar ist.

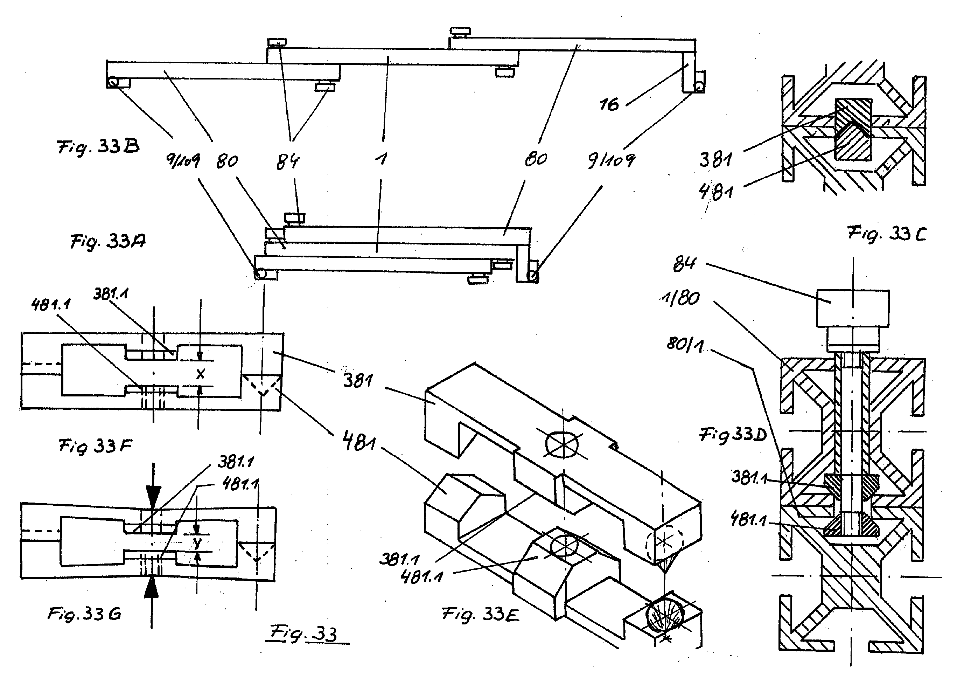

In Fig. 33 ist eine weitere Lösung zur Veränderung der Wirkbreite des Fahrradhalters gemeinsam mit anderen Formstücken gezeigt. Hierdurch ist der Transport einer Person auf einem der nicht umgelegten Rücksitze und der gleichzeitige Transport eines Fahrrads möglich, was bei keinem der bekannten Fahrradhalter möglich ist.
Im Vergleich, bei Nichtbenutzung für den Fahrradtransport beanspruchen die bekannten Fahrradhalter einen wesentlichen Teil des Laderaums; oft ist die Nutzung der hinteren Fahrzeugsitze für den Personentransport nicht möglich.

Fig. 11A bis C zeigen einen Fahrradhalter, dessen Grundhalter 1 in seiner Länge aus mehreren Profilteilen 33 besteht. Die Profilteile 33 können in beliebig wählbaren Winkel zueinander stehen und sind über handelsübliche Schnellverbinder 78 miteinander fixiert. Diese Verbindung ist durch Lösen eines Gewindestifts 78.2 der Schnellverbindung 78 trennbar. Dabei wird der Gewindestift 78.2 nicht völlig aus dem Querstück 78.1 entfernt. Das Querstück 78.1 ist in seiner Position mit dem Profilteil 33 verbunden. Die Verbindung kann durch Verkleben oder durch ein plastisches Material zwischen Querstück und Profilteil erzeugt werden. Hierdurch bleiben alle Teile der Verbindung auch dann unverlierbar verbunden, wenn die Profilteile 33 voneinander und/oder von den Profilabschnitten 16 getrennt sind.

Die Profilteile 33 sind untereinander und gegenüber eventuell daran befestigten Profilabschnitte16 zusätzlich mit Verdrehsicherungs-Nutensteinen 54 fixiert. Diese Verdrehsicherungs-Nutensteine 54 sind an ihren zur Zentrierung erforderlichen Flächen konisch ausgebildet. Durch gezielte Positionierung der Verdrehsicherungs-Nutensteine 54 an ihrem Einsatzort lassen sich die Verbindungen spielfrei und formschlüssig gestalten und hohe Biegemomente übertragen.
Mit der Aufteilung des Grundhalters 1 in mehrere Profilteile 33 lässt sich der demontierte und zerlegte Fahrradhalter bei Nichtbenutzung einfacher im PKW mitführen.
Wie unter Fig. 10 beschrieben kann der Einsatz der Profilabschnitte 16 zusätzliche Vorteile bieten.

Fig. 12A bis C zeigen die Nutzung und Bedienung des Sicherheits-Einrastmechanismus der umgelegten Rücksitzlehne zur Fixierung des Fahrradhalters. Der untere Teil der Abbildung ist PKW-intern innerhalb der Rücksitzlehne untergebracht.
Fig. 12A zeigt, wie durch Druck über Kugelkopf 38 und Zuganker 37 der Sicherheits-Einrastmechanismus arretiert wird.
Fig. 12B zeigt die arretierte Position. Es lassen sich nun über den Zuganker 37 und die Rändelmutter 15 in umgekehrter Richtung Zugkräfte zwischen Sicherheits-Einrastmechanismus und Grundhalter 1 erzeugen. Hierdurch wird der Grundhalter 1 gegen die Ladefläche des PKW gespannt und sicher im Fahrzeug fixiert. Durch die Ausbildung des Zugankers 37 entsteht zwischen den zu belastenden Elementen im Fahrzeug ein Formschluss, welcher eine ungewollte Lageänderung ausschließt, siehe Fig. 12C.
Der Zuganker 37 kann durch die serienmäßig vorhandene Löseeinrichtung des Sicherheits-Einrastmechanismus wieder gelöst werden. Hierdurch wird der Fahrradträger frei und kann demontiert werden.

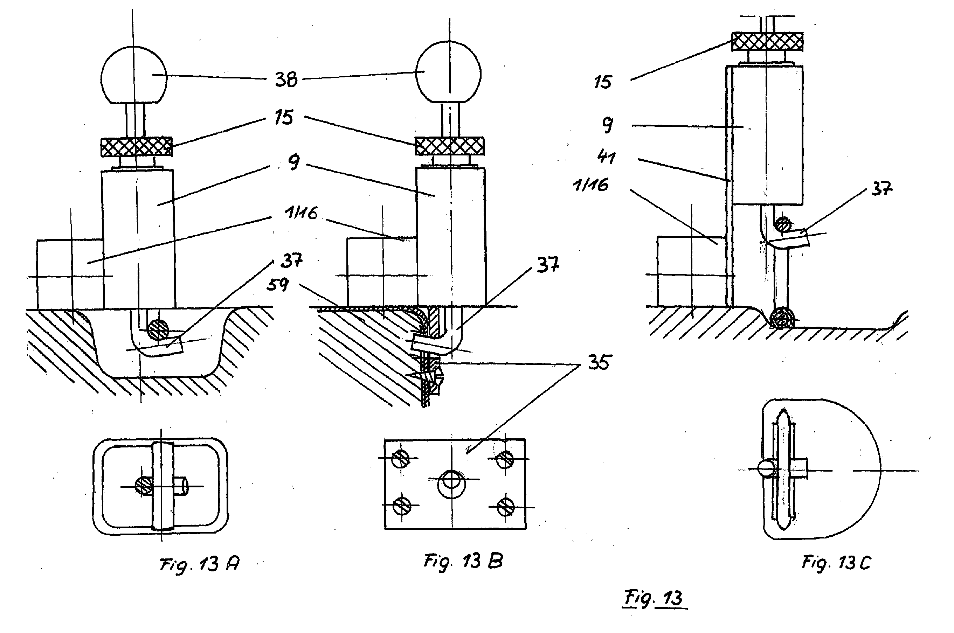

Fig. 13A bis C zeigen weitere Fixiermöglichkeiten des Grundhalters 1 im PKW. Der Zuganker 37 ist frei drehbar und axial verschiebbar innerhalb des Riegelelements 9 gelagert.
In Fig. 13A ist die Fixierung an einer unter der Ladefläche versenkten Halterung gezeigt. Der untere Teil des Zugankers 37 wird neben die versenkte Halterung gebracht, der gesamte Grundhalter 1 wird so verschoben, dass das Hakenteil unter der versenkten Halterung sitzt. Danach wird über die Rändelschraube 15 der Zuganker angehoben und der Grundhalter 1 gegen die Ladefläche des Fahrzeugs gespannt. Die Demontage erfolgt in umgekehrter Reihenfolge. Der Zuganker 37 ist fest mit dem Kugelkopf 38 verbunden. Hierdurch lässt sich der Zuganker gezielt führen.
Fig. 13 B zeigt die Fixierung an nachträglich im Fahrzeug angebrachten Elementen. Hier ist beispielsweise ein Ankerblech 35 seitlich gegen die breitere umgelegte Rücksitzlehne 59 geschraubt. Der Zwischenraum zwischen der breiteren umlegbaren Rücksitzlehne 59 und der schmaleren umlegbaren Rücksitzlehne 60 ist ausreichend groß für die Befestigung eines ca. 3 mm dicken Stahlbleches. In diesem Bereich befindet sich bei allen bekanten PKW ausreichend tragfähiges Material innen in der Rücksitzlehne, so dass die Befestigung des Ankerblechs 35 zum Beispiel mit gewindefurchenden Schrauben sicher erfolgen kann. Aus Sicherheitsgründen empfiehlt es sich, diese Arbeiten von einem Fachmann ausführen zu lassen.
Zur Fixierung des Grundträgers im PKW wird der Zuganker 37 in der Mittelbohrung des Ankerblechs 40 eingehängt und über die Rändelmutter 15 nach oben gezogen.
Fig. 13C zeigt die Fixierung des Grundhalters 1 an einer Verzurröse des Fahrzeugs. Hierzu ist das Riegelelement 9 über eine Verlängerung 41 am Grundhalter 1 höher positioniert.

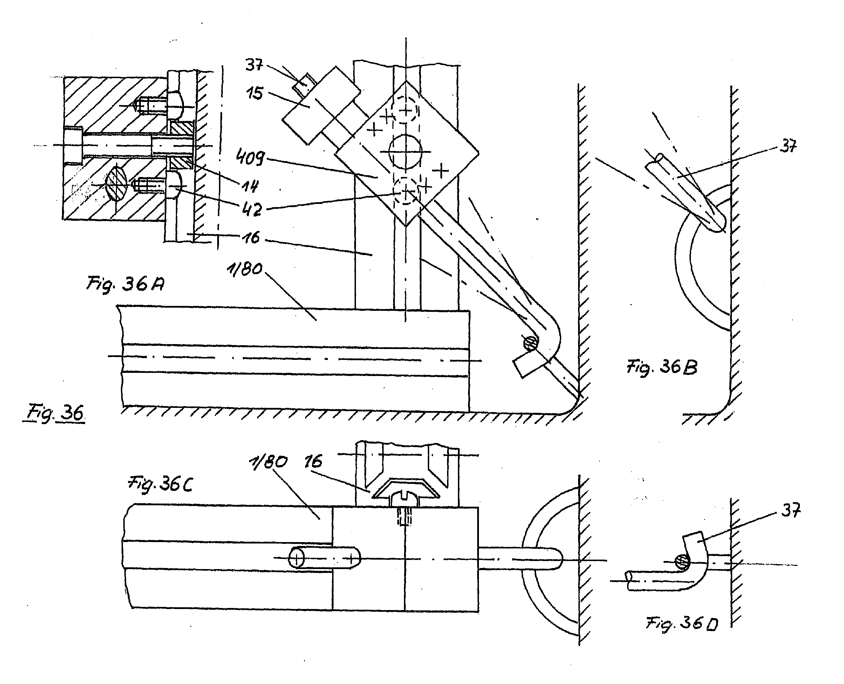

In Fig. 24 und 36 sind noch weitere Möglichkeiten zur Fixierung des Grundhalters 1 an einer Verzurröse dargestellt.

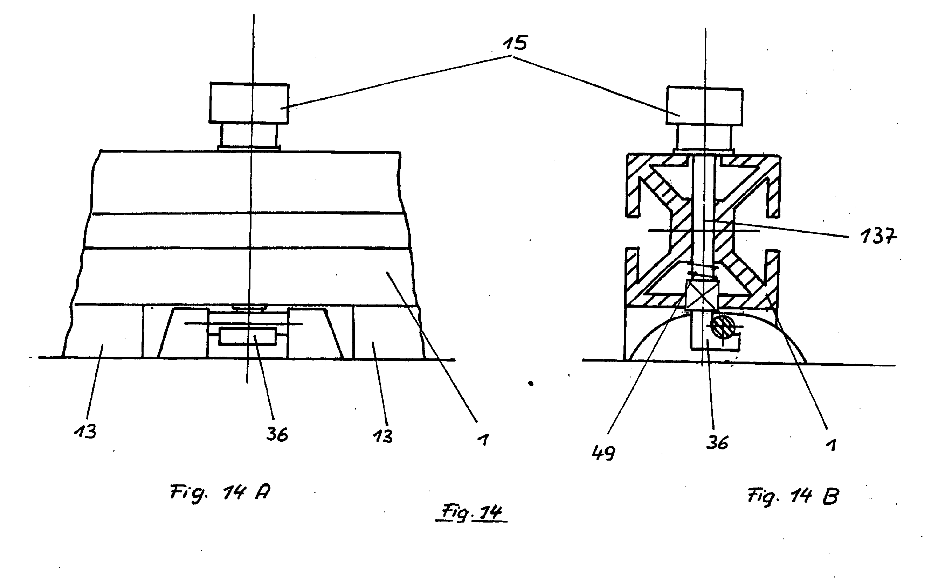

Fig. 14A und B zeigen die Fixierung des Grundhalters an einer in einigen Fahrzeugen vorhandenen Kindersitzsicherung, welche auf der Oberfläche der umgelegten Rücksitzlehne positioniert sein kann. Der Grundhalter 1 ist über das Auflageprofil 13 angehoben. Der Zuganker Kindersitzsicherung 36 wird unter den Sicherungsbolzen geschoben und danach über die Rändelschraube 15 nach oben gezogen und hiermit der Grundhalter fixiert.

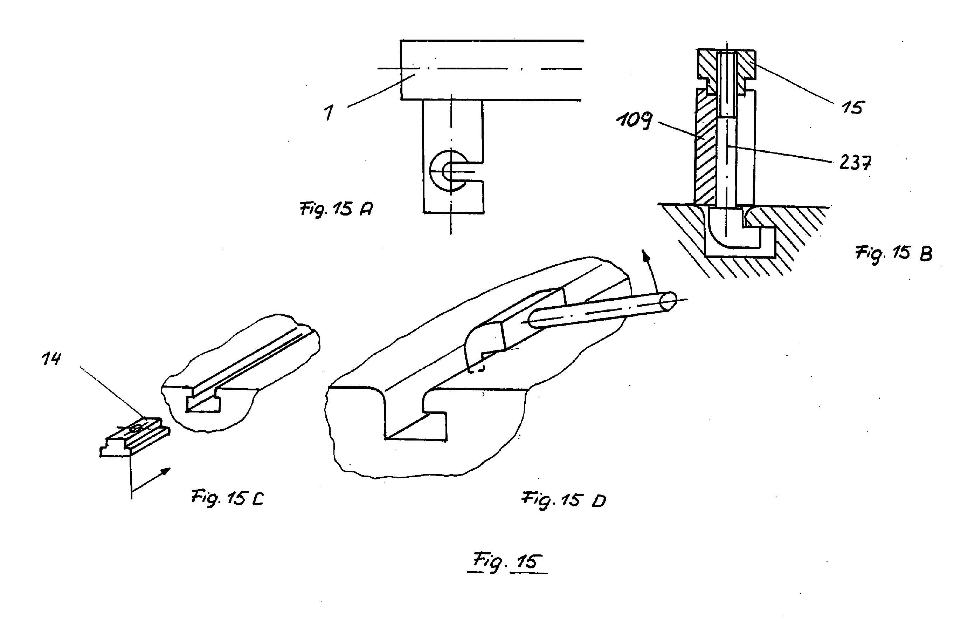

Fig. 15A bis D zeigen die Fixierung des Grundhalters 1 an Nutprofilen, welche sich serienmäßig im Laderaum des Fahrzeugs befinden können. Dabei können die Nuten T-förmig wie links gezeigt oder L-förmig, wie rechts gezeigt, ausgebildet sein. Die Nuten können auch der Fixierung von Fahrzeugsitzen dienen, welche im hier gezeigten Zustand demontiert sind. Es sind sämtliche Kombinationen von Nutensteinen und Nuten möglich, wie sie in Figur 9 gezeigt und vorstehend beschrieben wurden.

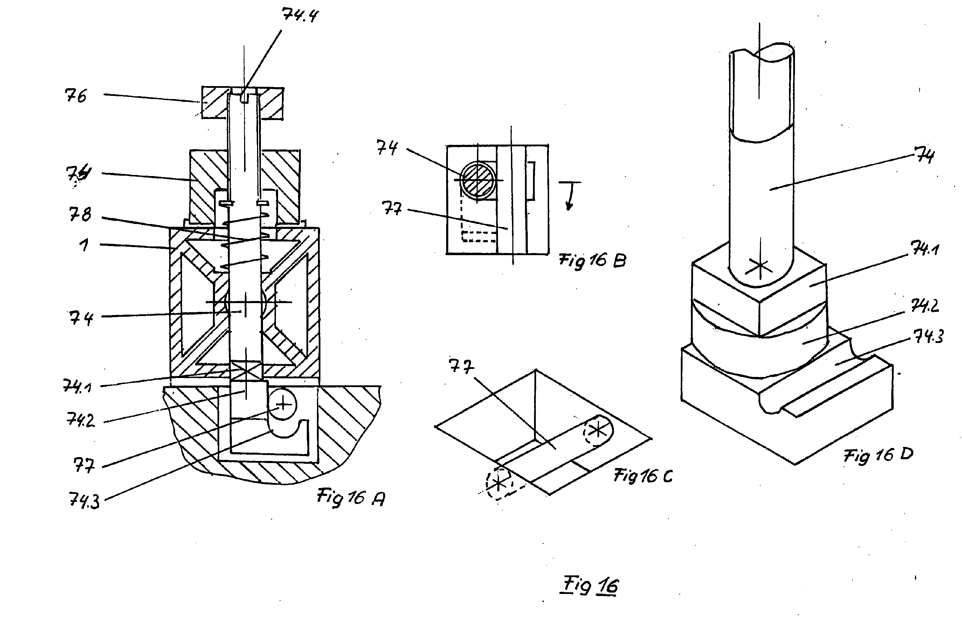

Fig. 16A bis D zeigen einen Zuganker 74 zur Befestigung des Grundhalters 1 im Fahrzeug an unter der Ladefläche versenkten Halterung mit engen Platzverhältnissen innerhalb der Versenkung. Hierzu wird der Zuganker 74 zunächst neben der Halterung 77 des Fahrzeugs eingeführt, dann mit dem Fußprofil 74.3 unter die Halterung 77 geschwenkt und anschließend mittels Rändelmutter 75 nach oben verspannt.
Hierzu besitzt der Zuganker 74 in seinem unteren Teil einen Vierkant 74.1, welcher mit einer entsprechenden Ausnehmung im Grundhalter 1 korrespondiert. Die Feder 78 drückt diesen Vierkant 74.1 in seine vorgesehene obere Position innerhalb des Grundhalters 1. In oberer Position der Rändelmutter 74 ist der Zuganker über den Ankerkopf 76 gegen den Druck der Feder 78 nach unten aus der Ausnehmung des Zugankers 1 schiebbar und dann drehbar. Der Schlitz im oberen Teil des Zugankers 74 korrespondiert mit dem unteren Ankerteil 74.3.

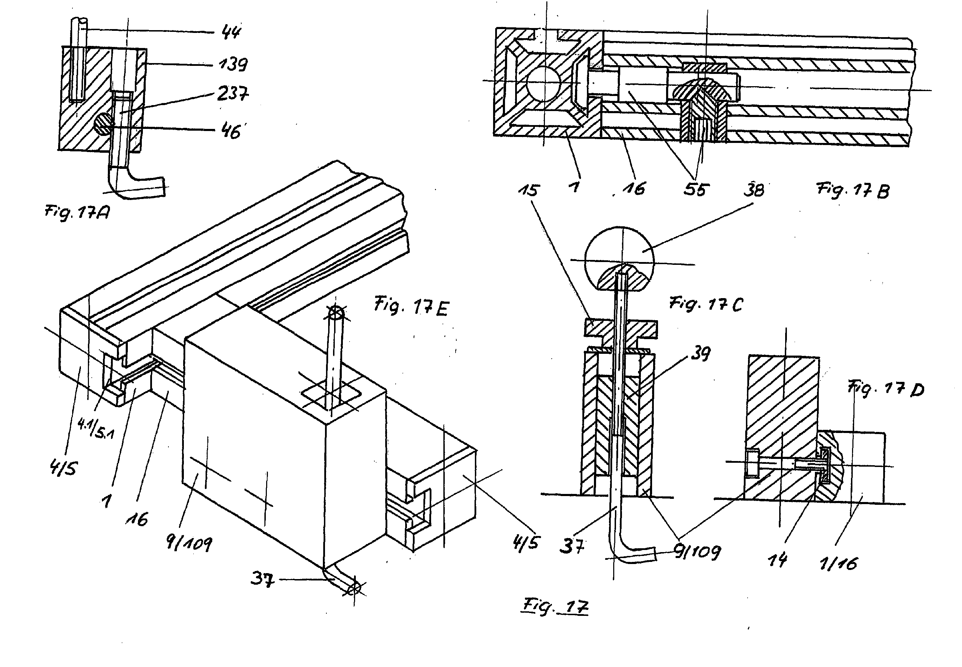

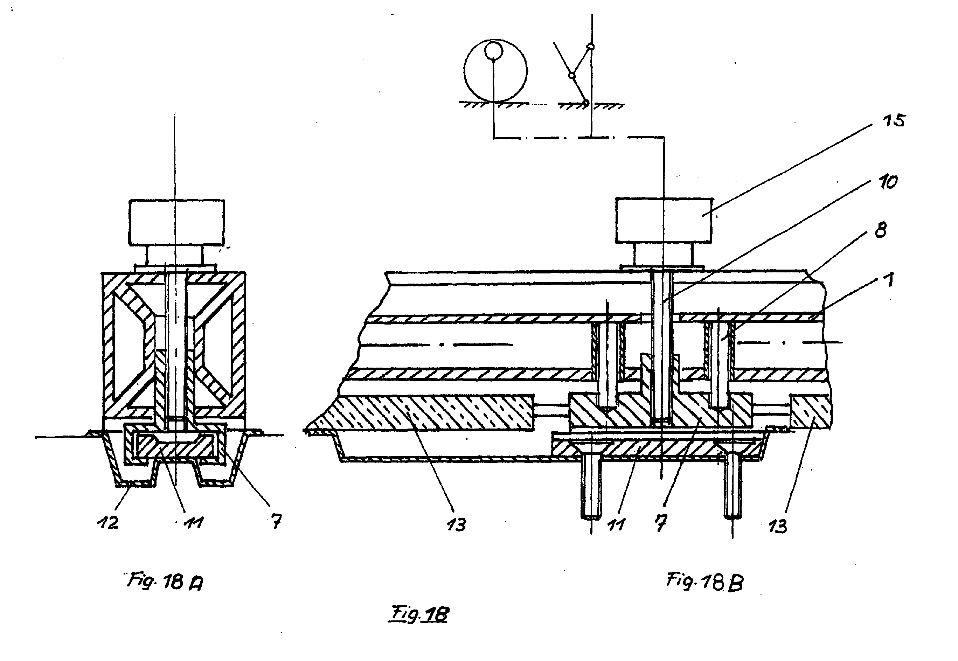

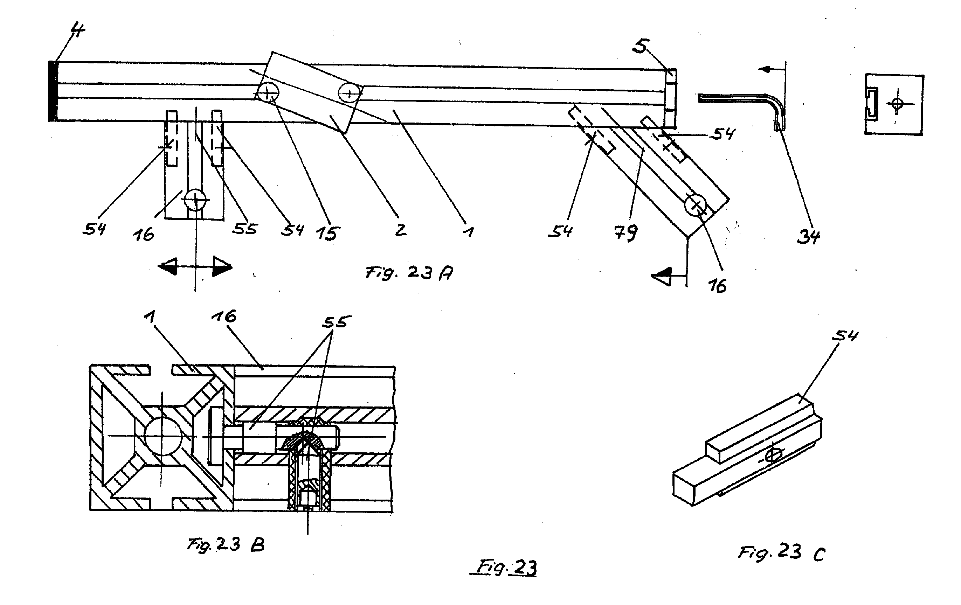

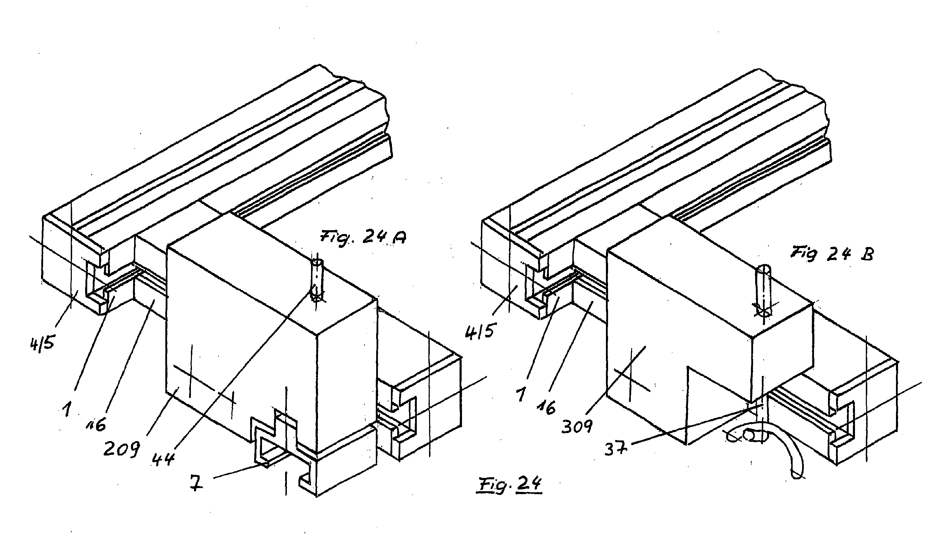

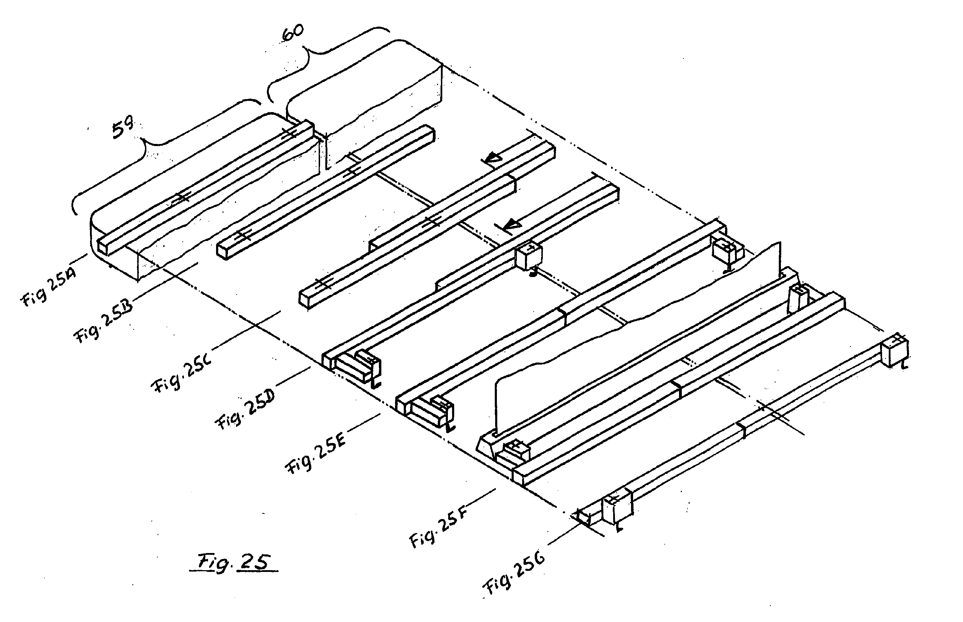

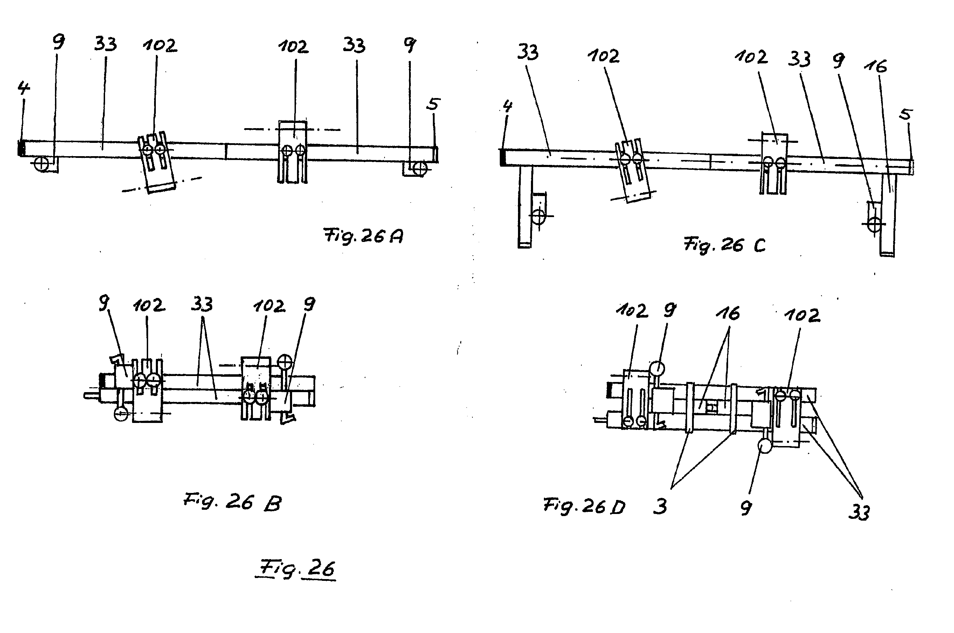

Fig. 17A bis E zeigen weitere mögliche Formen des Riegelelements 109 und seine Befestigung am Grundhalter 1 direkt oder über den Profilabschnitt 16. Im Riegelelement 109 ist ein Kulissenstein 39 axial verschiebbar aber verdrehgesichert gelagert. Innerhalb des Kulissensteins 39 ist der Zuganker 39 mit Rändelmutter 15 und Kugelkopf 38 in einer Gewindebohrung fixiert (Fig. 17D).
In Fig. 17A ist der kürzere Zuganker 237 in einer Gewindebohrung, die Stiftschraube 44 mit Rändelmutter 15 und Kugelkopf 38 über eine zweite Gewindebohrung im Kulissenstein 139 gelagert. Das elastische Material zwischen Zuganker 237 und Kulissenstein 139 erzeugt ein in engen Grenzen definierbares Drehmoment bei Verdrehung des Zugankers innerhalb der Gewindebohrung. Hierdurch wird der Zuganker werkzeuglos axial und radial verstellbar, behält aber seine vorgegebene Stellung während der Nutzung bei. Das Riegelelement 9 ist über Nutensteine 14 und Schrauben am Profilabschnitt 16 oder auch am Grundhalter 1 verstellbar und fixierbar. Alternativ können auch hier Exzenter- oder Kniehebel-Elemente eingesetzt werden.
Der Profilabschnitt 16 ist mit einem Verbindungselement 55 am Grundhalter 1 befestigt. Die Verbindung ist mittels Montagewerkzeug 34 (Fig. 23A) durch Lösen des Gewindestifts verstellbar und demontierbar. Dabei bleiben alle Elemente der Verbindung unverlierbar am Profilabschnitt erhalten.
Auch in dieser Verbindung ist der Verdrehsicherungs-Nutenstein angewendet, auf seine Darstellung wurde hier verzichtet, ein vergleichbarer Nutenstein ist bei 54 in Fig.11C gezeigt.
Durch die gezeigten Aussparungen 4.1/5.1 in den Schutzabdeckungen 4/5 ist die Verbindung zwischen Grundhalter 1 und Profilabschnitt 16 vollständig trennbar ohne die Schutzabdeckungen 4/5 entfernen zu müssen.
Die Schutzabdeckungen können an verschiedenen Einbauorten unterschiedliche Formen und/oder Farben aufweisen. Hiermit lässt sich das Gesamtsystem leichter beschreiben und handhaben.

Fig. 18A und B zeigen die Fixierung des Grundhalters 1 mit Zugelement 7 an einer Rollohalterung 11. Das Rollo zur Laderaumabtrennung ist hier entfernt. Das Zugelement 7 ist geometrisch ähnlich dem Element für die Rollobefestigung.

Die Gummifedern 8 drücken das Zugelement permanent in seine untere Position und erleichtern den Montagevorgang.
Zur Montage wird der Grundhalter 1 in den nach oben offenen Teil der Abdeckmulde 12 gelegt, danach in Richtung Rollohalterung 11 verschoben und über die Rändelmutter 15 auf der Ladefläche fixiert. Die Demontage erfolgt umgekehrt.
Statt Muttern-Schrauben-Kombination kann auch hier ein Exzenter oder ein Kniehebel zum Einsatz kommen. Im Nutprofil des Grundhalters 1 ist das Auflageprofil 13 verklemmt.

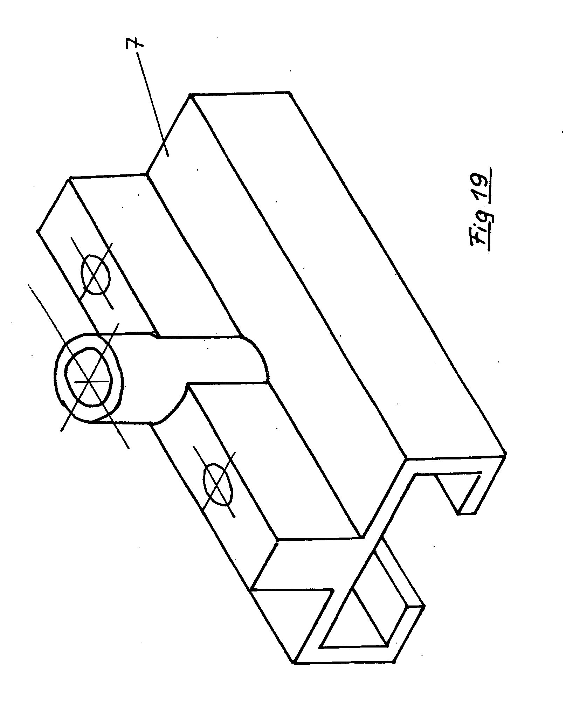

Fig. 19 zeigt das Zugelement 7 aus Fig18 in perspektivischer Darstellung.

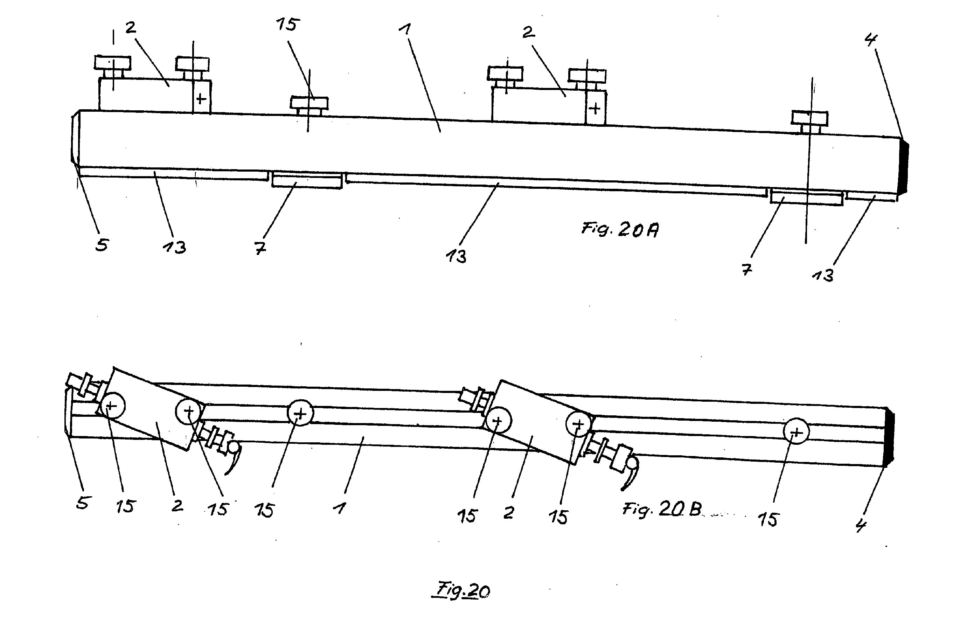

Fig. 20A und B zeigt einen einfachen Fahrradhalter mit kurzem Grundhalter 1 und einfachen Gabelhaltern 2 bei Nutzung der in Fig. 18 dargestellten Technik.

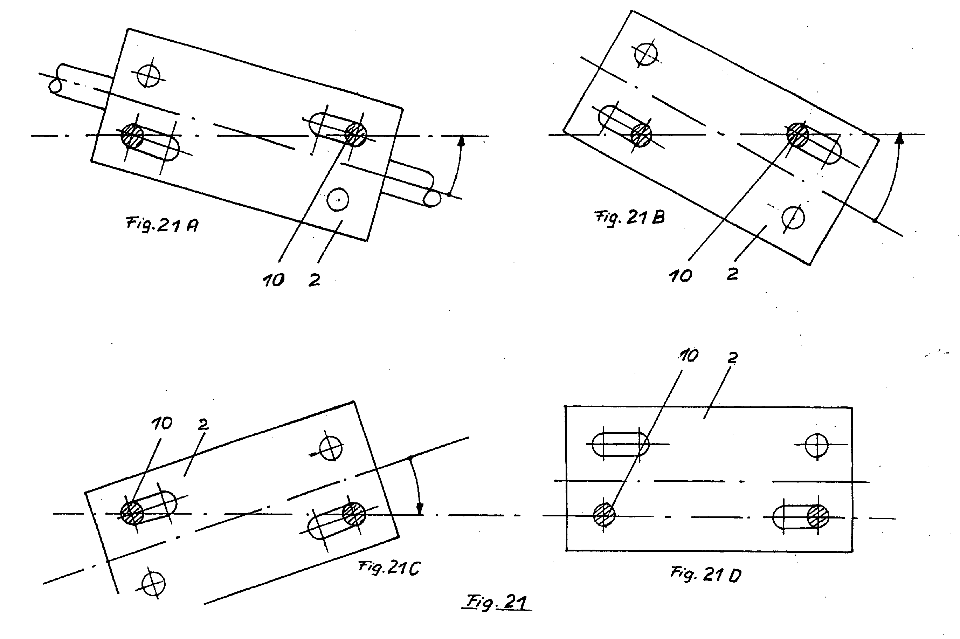

Fig. 21A bis D zeigt die Verstellmöglichkeiten des Gabelhalters 2.

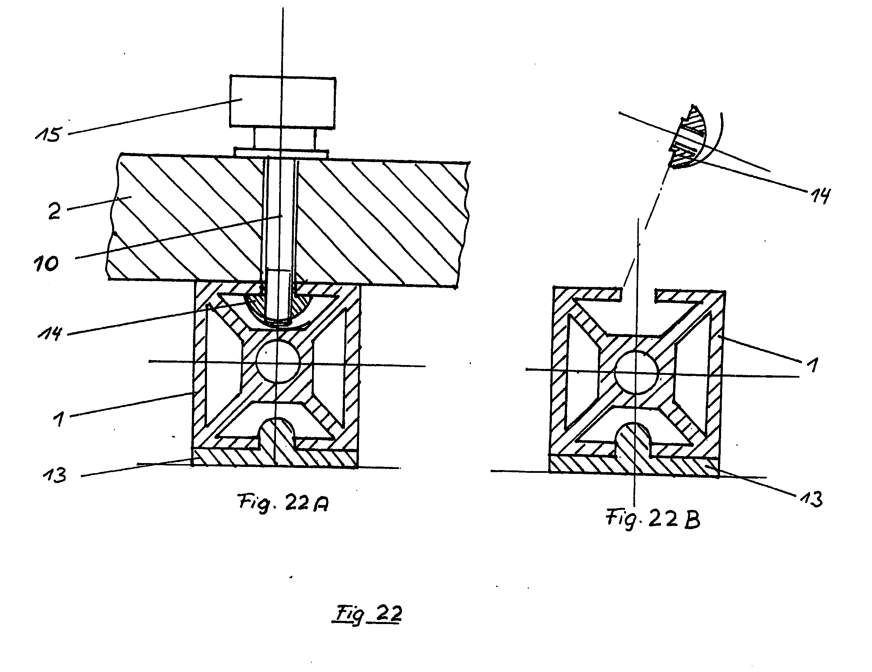

Fig. 22A und B zeigt eine Möglichkeit zur Anwendung eines einschwenkbaren Nutensteins 14 nach Figur 9 G und die Fixierung des Gabelhalters 2 auf dem Grundhalter 1.

Fig. 23A bis C zeigen eine andere Möglichkeit einer Anordnung des Grundhalters 1 mit dem Profilabschnitt 16 und dem Gabelhalter 2. In dieser Darstellung ist die Nutzung des Verdrehsicherungs-Nutensteins 54 gezeigt.

Außerdem ist gezeigt wie und wo das einzige erforderliche Montagewerkzeug 34 für die Demontage und Verstellung des Fahrradträgers aller in dieser Patentanmeldung beschriebenen Ausführungsformen unverlierbar angebracht ist. Hierzu ist in einer Schutzabdeckungen 4/5 ein entsprechend dimensionierte Bohrung angebracht.

Fig. 24A und B zeigen andere erfindungsgemäße Fixiermöglichkeiten des Grundträgers im PKW.
In Fig. 24A ist die Fixierung des Grundhalters 1 an der Rollohalterung 11 gezeigt unter zusätzlicher Nutzung von Profilabschnitt 16 und Fixierelement 209. Mit dieser Lösung ergeben sich gegenüber Fig. 20 mehr Freiheiten, um den Grundhalter 1 optimal im PKW zu platzieren.
In Fig. 24B ist die Fixierung des Grundhalters 1 am Fixierelement 309 dargestellt. Gegenüber Fig. 13C sind hier keine Verlängerung 41 erforderlich.

Fig. 25A bis G zeigen die vereinfachte Darstellung der verschiedenen Fixiermöglichkeiten auf den umgeklappten Rücksitzlehnen. Die breite Rücksitzlehne 59 ist links unten, die schmale Rücksitzlehne 60 rechts oben sinnbildlich dargestellt.
Fig. 25A zeigt die Nutzung nach dem Patentanspruch 20

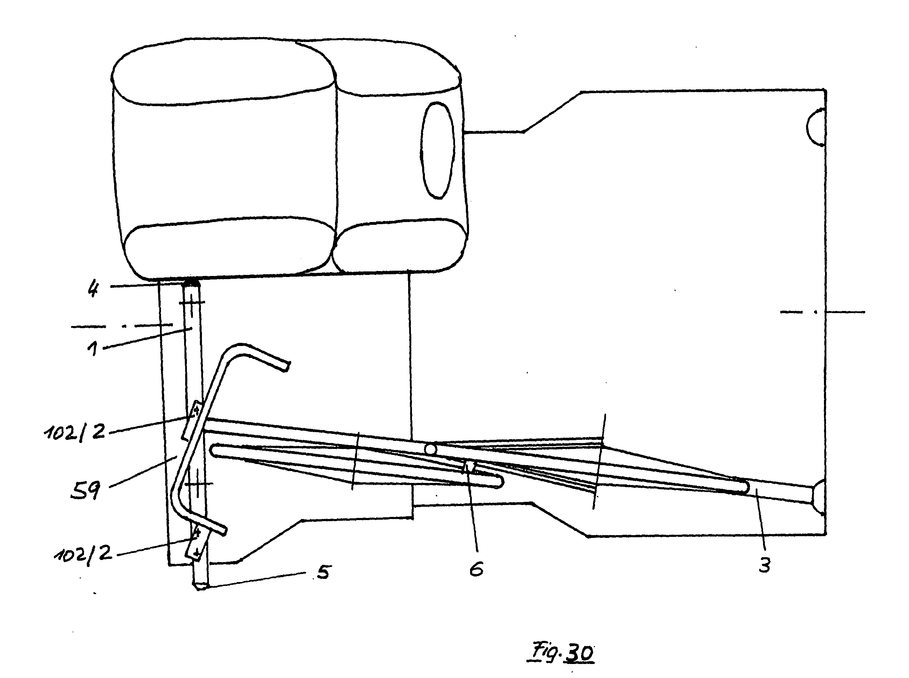

Fig. 25B zeigt die Nutzung nach dem Patentanspruch 20. Gezeigt ist die Position, in welcher der schmale hintere Rücksitz nicht nutzbar ist. Bei Fixierung des Fahrradhalters um 180 Grad verdreht ist die schmale Rücksitzbank trotz Fahrradtransport nutzbar (Siehe auch Fig. 30)
Fig. 25C zeigt die Nutzung nach den Patentansprüchen 8 und 20.
Fig. 25D zeigt die Nutzung nach den Patentansprüchen 4, 8 und 15
Fig. 25E zeigt die Nutzung nach den Patentansprüchen 4, 9 und 10
Fig. 25F zeigt die Nutzung nach den Patentansprüchen 4 ,9,1 0 und 16.
Fig. 25G zeigt die Nutzung nach den Patentansprüchen 9 und 10

Fig. 26A bis D zeigen die Möglichkeiten, den Fahrradträger zu zerlegen und in ein handliches Bündel zu verpacken.
In Fig. 26A ist ein Fahrradträger ohne Profilabschnitte 16 in Gebrauchsstellung dargestellt (wie in Figur 25G).
In Fig. 26B sind die beiden Profilteile 33 getrennt und raumsparend zusammengeschoben. Mit den beiden Gabelhaltern 102 werden die
Profilteile 33 mit den daran weiterhin befestigten Riegelelementen 9 zu einem kompakten Bündel fixiert.
In Fig. 26C ist der komplette Fahrradträger mit Profilabschnitten 16 in Gebrauchsstellung dargestellt (wie in Figur 2).
In Fig. 26D ist der komplette Fahrradträger nach Fig. 26C soweit notwendig zerlegt und zu einem kompakten Bündel verbunden. Hierzu werden die beiden Profilabschnitte 16 von den beiden Profilteilen 33 getrennt. Die Profilabschnitte 16 werden zwischen die Profilteile 33 gelegt, die Riegelelemente 9 verbleiben an den Profilabschnitten 16 und liegen oben. Die genannten Teile werden seitlich dicht zusammen geschoben und die Gabelhalter 102 so fixiert, dass das Paket in sich selbst stabil ist. Zusätzlich werden die Spannbänder für die beiden Vorderräder 3 mittig um das Paket geschnürt.
Alle Einzelteile des Fahrradhalters sind fest und unverlierbar miteinander verbunden.
Normalerweise ist unter dem Ladeboden (im Bereich der Reserveradablage) ausrechend Raum zur Unterbringung. Selbstverständlich sind bedarfsweise zusätzlich noch die Gabelhalter 2 und die Riegelelemente 9 demontierbar mit dem mitgelieferten Montagewerkzeug 34.

Fig. 27A bis D zeigen die Befestigung eines losen Vorderrades am Grundhalter 1, einem Profilabschnitt 16 oder einem Profilteil 33.
Der zweiteilige Adapter 64 ist am Grundhalter 1 verschiebbar, schwenkbar und mittels Riegelelement 73 fixierbar. Gleichzeitig ist der Schwenkhalter 65 innerhalb des Adapters 64 schwenkbar und mit dem gleichen Riegelelement 73 fixierbar. Die Aufnahme des Fahrrad-Vorderrads erfolgt bevorzugt in einem Federstecker nach DIN 11024, welcher am Schwenkhalter 65 befestigt ist. Somit lässt sich der gesamte Vorderradhalter ohne Nutzung von Werkzeugen am Grundhalter 1 montieren, einstellen, fixieren und demontieren. Auch das Vorderrad kann werkzeuglos mit dem Vorderradhalter verbunden und gelöst werden.
Alternativ kann das Riegelelement 73 als Schrauben-Mutternkombination, als Exzenter oder als Kniehebel ausgebildet sein.

Fig. 28A bis D zeigen die Befestigung eines Sattels mit Sattelstütze am Grundhalter 1, einem Profilabschnitt 16 oder einem Profilteil 33.
Der Adapter 67 ist verschiebbar und wird mittels Zuganker 74 fixiert. Im oberen Teil der Sattelaufnahme 70 sind mindestens drei Formfedern 68 befestigt, welche die Sattelstütze zentrisch in der Sattelaufnahme halten. Die Abmessungen von Sattelaufnahme 70 und Formfedern 68 ermöglichen die Aufnahme aller praktisch bekannten Sattelstützen-Durchmesser.
Die Sattelstütze ist bei sportlich genutzten Mountainbikes stark gefettet, damit eine Sattelhöhenverstellung in kritischem Gelände problemlos durchgeführt werden kann. Durch Nutzung der beschriebenen Einrichtung wird eine Verschmutzung des PKW-Innenraums und der Nutzer durch die gefettete Sattelstütze verhindert. Die von den Formfedern evtl. aufgenommen Fettreste verbleiben im Inneren der Sattelaufnahme.

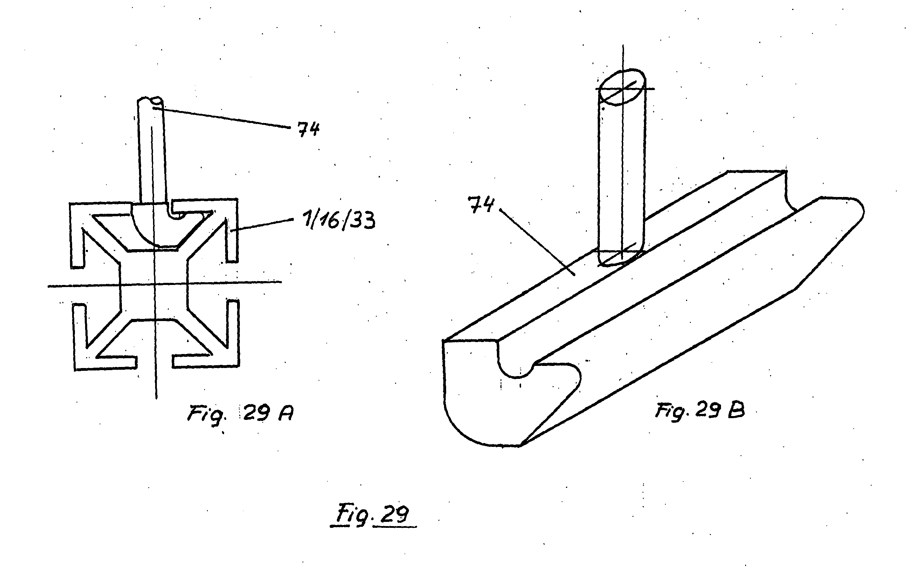

Fig. 29A und B zeigen eine besondere Ausführungsform eines in Fig. 9 M und in Fig. 15 gezeigten Nutensteins.

Fig. 30 zeigt die Draufsicht auf die Fixierung eines Fahrrads im Laderaum und gleichzeitig die Transportmöglichkeit einer Person auf einem nicht umgelegten Rücksitz. Die Fixierung des Grundhalters im PKW erfolgt hier nach den Anspruch 20.
Es ist jedoch auch eine Fixierung des Grundhalters 1 nach den Ansprüchen 4, 10 und 15 möglich wie in Figur 10 B gezeigt. Es lassen sich je nach PKW-Größe bis zu zwei Fahrräder im teilgenutzten Ladebodenbereich und eine Person auf einem hinteren Sitzplatz transportieren.

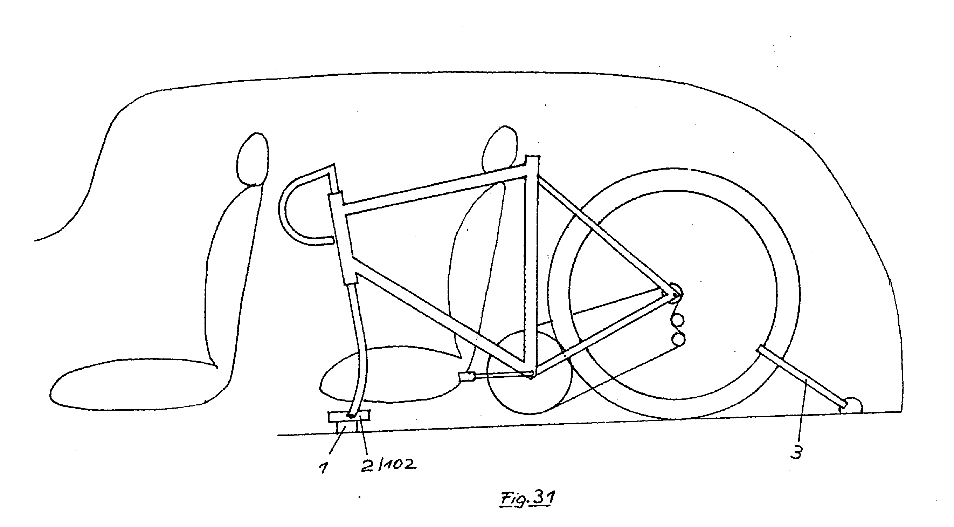

Fig. 31 zeigt die Seitenansicht zu Figur 30.

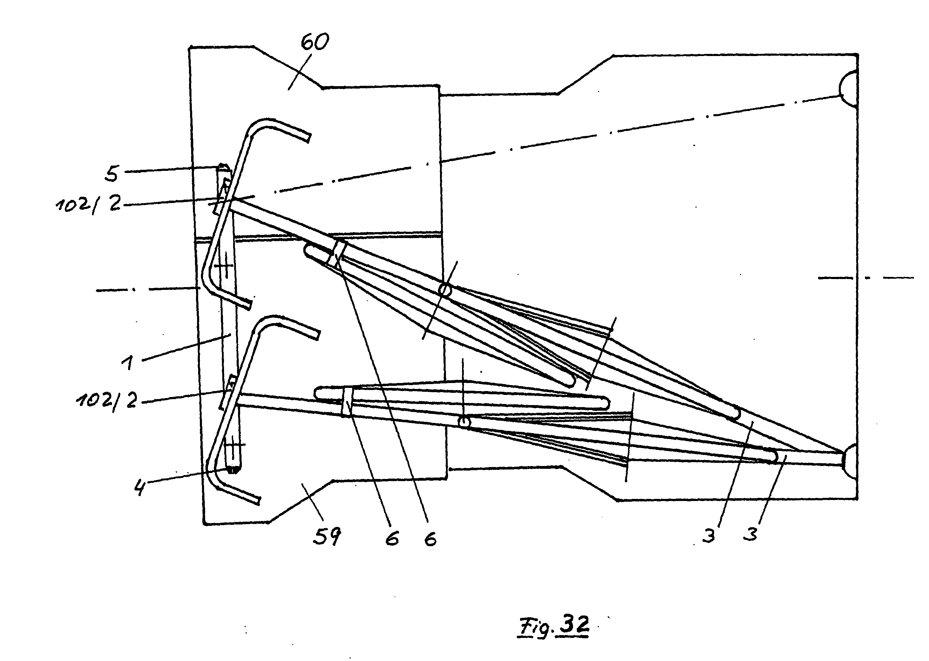

Fig. 32 zeigt die Draufsicht auf die Fixierung von zwei Fahrrädern bei Nutzung des in Fig. 30 gezeigten Fahrradträgers. Der Fahrradträger ist gegenüber Fig. 30 um 180 Grad gedreht in den gleichen Fixierungen für das Rollo aufgenommen. Allerdings ist hier auch ein Teil des schmalen Rücksitzes für den Fahrradtransport genutzt. Der Transport einer Person auf dem schmalen Rücksitz ist nicht mehr möglich.
Es ist jedoch auch eine Fixierung des Grundhalters (1) nach den Ansprüchen 4, 10 und 15 möglich wie in Figur 10 A gezeigt. Je nach PKW-Größe lassen sich bis zu vier Rennräder befestigen, wenn die Fahrradlenker für die Montage im Fahrzeug gelöst und raumsparend nebeneinander justiert werden.

Fig. 33A bis G zeigen, vergleichbar mit Fig. 10, eine weitere Möglichkeit zur Veränderung der Wirkfläche eines Fahrradhalters. Die in Fig. 10 gemachten Erläuterungen sind hilfreich zum Verständnis.
Am Grundhalter 1 sind also zwei Grundhalter-Verlängerungen 80 angebracht. Eine Verlängerung ist nach links, die andere nach rechts entlang dem Grundhalter verschiebbar und fixierbar. Hierdurch wird die zusammen geschobene Ausführung besonders raumsparend
Die Fixierung der Riegelelemente 9/109 ist an jeder Stelle in Längsrichtung des Grundhalters oder mindestens einer der beiden Grundhalter-Verlängerungen 80 möglich. Die Nutzung von Profilabschnitt 16 ist wahlweise möglich.
Die in Fig. 33E gezeigten Formstücke 381 und 481 sind als zusammengehöriges Paar in Funktionsstellung zwischen den Profilen von Grundhalter 1 und Grundhalter-Verlängerung 80 angeordnet und werden durch das Riegelelement 84 in ihrer vorgesehenen Position gehalten.
Im geöffneten Zustand des Riegelelements 84 ergibt sich das in Fig. 33F gezeigte Bild der Formstücke entsprechend ihrem Herstellzustand (mit Abstandsmaß x).
Bei geschlossenem Riegelelement 84 nach Fig. 33G werden die beiden Formstücke 381/481 durch die eingeleiteten Spannkräfte bestimmungsgemäß innerhalb ihres elastischen Bereiches verformt. Die im Mittelteil angeordneten Zentrierflächen 381.1 und 481.1 nähern sich einander (Abstandsmaß y).
Im Einbauzustand zwischen den Profilen von Grundhalter 1 und Grundhalter-Verlängerung 80 nach Fig. 33D berühren die Zentrierflächen 381.1 und 481.1 die Profilkanten der Profile und erzeugen hier einen gewollten Formschluss zwischen den Profilen. Durch die gewählte Geometrie der Formstücke 381 und 481 werden zur Lageänderung der Grundhalter-Verlängerung 80 gegenüber dem Grundhalter 1 bei gelöstem Riegelelement 84 die Profile zueinander verschiebbar lose gehalten, siehe Fig. 33C. Die Aufteilung in äußere und innere Zentrierflächen der Formstücke 381 und 481 ermöglicht die besonders bedienungsfreundliche Verstellung der Profilteile zueinander.

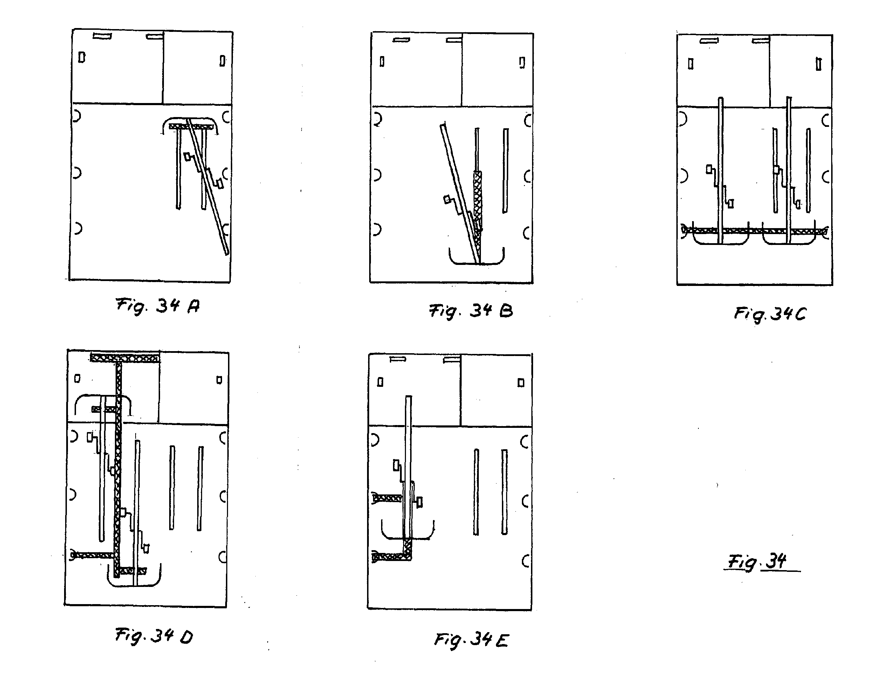

Fig. 34A bis E zeigen noch einmal einige vereinfachte Darstellungen von Fixiermöglichkeiten des Fahrradhalters im hinteren Bereich eines Fahrzeugs.
In den Darstellungen ist jeweils oben links die breite, rechts die schmale umklappbare Rücksitzlehne dargestellt. Im hinteren Bereich der Ladefläche sind je Seite drei Verzurrösen und auf der rechten Seite zwei Nuten erkennbar. Fahrzeugfahrtrichtung ist nach oben.
Fig. 34A zeigt die Nutzung von Anspruch 14 mit einem Fahrrad in Fahrtrichtung des PKW fixiert.
Fig. 34B zeigt die Nutzung von Anspruch 14 mit einem Fahrrad gegen die Fahrtrichtung des PKW fixiert.
Fig. 34C zeigt die Nutzung von Anspruch 11 mit zwei Fahrrädern gegen die PKW- Fahrtrichtung fixiert.
Bei Fig. 34D sind die Ansprüche 11 und 20 genutzt für die Fixierung von je einem Fahrrad in Fahrtrichtung und einem weiteren Fahrrad gegen die Fahrtrichtung des PKW.
In Fig. 34E ist der Fahrradträger an zwei Verzurrösen nach Anspruch 11 fixiert, es kann ein Fahrrad gegen die Fahrtrichtung wie gezeichnet oder wahlweise in Fahrtrichtung befestigt werden.
Je nach den Anforderungen sind weitere Kombinationen für die Fixierung des Fahrradhalters im Fahrzeug möglich.

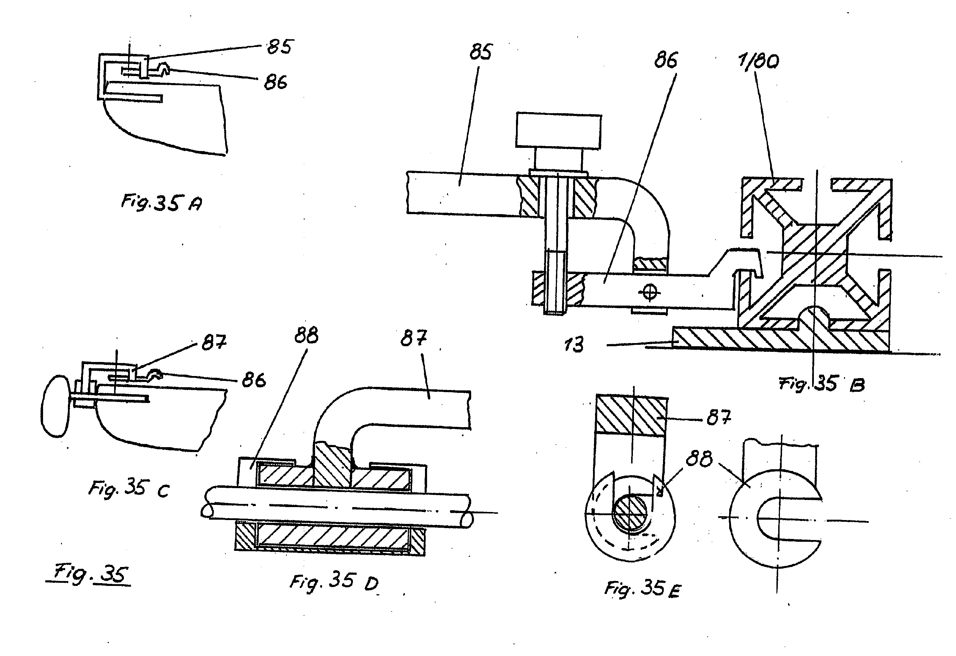

Fig. 35A bis E zeigen die Fixierungen des Fahrradträgers im Bereich der Kopfstütze.
In Fig. 35A ist die die Kopfstütze demontiert. In Ihre bestimmungsgemäße Position wird der Halter Kopfstützenaufnahme 85 gebracht, die Halteklammer 86 fixiert der Grundhalter 1. Fig. 35B zeigt Details hierzu.
In Fig. 35C bleibt die Kopfstütze in ihrer bestimmungsgemäßen Position montiert. An deren Füßen werden in der Partie zwischen Kopfstütze und Rücksitzlehne die Halter Kopfstütze 87 angebracht. Verschlussglied 88 sorgt für sicheren Halt an der Kopfstütze. Fig. 35D und E zeigen Details des Verschlussgliedes 88.
Fig. 36A bis D zeigen eine weitere Halterung für die Fixierung des Fahrradhalters an Verzurrösen, welche an der Seitenwand des Gepäckraums angebracht sein können. Seitlich am Grundhalter 1 oder an der Grundhalterverlängerung 80 ist das Zusatzprofil 16 befestigt. An diesem Zusatzprofil 16 ist höhenverstellbar und schwenkbar das Riegelelement 409 fixiert. Mit dem vorher beschriebenen Anker 37 und der entsprechenden Rändelmutter 15 kann der Fahrradhalter im Gepäckraum befestigt werden. Das Riegelelement ist verdrehgesichert durch die Köpfe der Schrauben 42, welche in die Nute des Zusatzprofils eingreifen. Durch Umsetzen der Schrauben 42 in vorbereitete Gewindebohrungen ist die Winkelstellung des Riegelelements einstellbar.

### Die Besonderheiten der Erfindung werden nachfolgend zusammengefasst:

Der Fahrradhalter ist weitestgehend aus Normteilen herstellbar.
Er eignet sich besonders für PKW mit umlegbaren Rücksitzlehnen zur Vergrößerung der Ladefläche und einer Heckklappe zur Beladung, so genannten Tourenfahrzeugen mit den Bezeichnungen Touring oder Caravan. Grundsätzlich ist er jedoch auch geeignet zum Transport von Fahrrrädern in anderen Fahrzeugen, zur Aufbewahrung oder Präsentation von Fahrrädern. Der Fahrradhalter ist an verschiedenen Elementen fixierbar, welche serienmäßig in den benannten Fahrzeugen vorhanden sein können, nämlich:
a) Sicherheits-Einrastmechanismus für die Rücksitzlehne
b) Verzurrösen im Laderaum
c) Unter der Ladefläche angeordnete Halterungen, (z. B. für herausnehmbare Fahrgastsitze)
d) Kindersitz- Sicherungen auf der Rückseite der umgeklappten Rücksitzlehne.
e) Im Laderaum angeordnete Nutprofile (z. B. für die verstellbare Fixierung von Fahrgastsitzen)
f) Im Laderaum vorhandene Nutprofile (z.B. zum Verzurren von Gepäck)
g) Halterungen für ein Rollo oder Gitter zur Abtrennung des Laderaums.
h) Kopfstützen, welche in der umgelegten Rücksitzlehen befestigt sind
i) Aufnahmebohrungen innerhalb der umgelegten Rücksitzlehnen, welche vorgesehen sind für die Aufnahme der (hier demontierten) Kopfstützen.
Außerdem können zusätzliche Elemente zur Fixierung des Fahrradhalters in das Fahrzeug eingebracht werden. Zum Beispiel im Raum zwischen den beiden umlegbaren Rücksitzlehnen eine verschraubte Metallscheibe mit Fixierbohrung. Durch Kombination von mehreren verschiedenen Fixierelementen für einen Fahrradträger ist der verfügbare Fahrzeug- Innenraum für den
Fahrradtransport, den Personentransport und den Gepäcktransport sehr variabel gestaltbar.
Die Lage des Fahrradträgers kann gegenüber den Fixierpunkten in Fahrtrichtung stufenlos verstellt werden.
Zusätzlich ist die Lage der Gabelhalter gegenüber dem Fahrradträger in drei Ebenen verstellbar.
Hierdurch ist die optimale Position der Fahrräder im jeweiligen Fahrzeug weitgehend frei bestimmbar.
Das Baukasten- Prinzip wird konsequent angewendet. Hierdurch lässt sich eine Vielzahl von Fahrradträger- Varianten erzeugen und verändern. Mit einigen Fahrradträger-Varianten ist der Fahrradtransport auf einem Teil der Ladefläche möglich und zusätzlich ist ein hinterer Rücksitz für den Transport eines Passagiers nutzbar.
Alle Fahrradträger-Varianten lassen sich entweder zerlegen oder raumsparend zusammenschieben. Die zerlegten Varianten lassen sich mit den eigenen Elementen zu einem handlichen Bündel verbinden. Alle Varianten lassen sich auch bei Nichtbenutzung zum Fahrradtransport dauerhaft im PKW mitführen, bevorzugt unter dem Ladeboden im Bereich des Reserverades.

Die Positionen aller verwendeten Bauteile zueinander lassen sich einfach einstellen und fixieren:
Zwischen dem Grundprofil 1 und weiteren Profilabschnitten 16 sind Verbindungselemente 55 vorgesehen, welche zur Veränderung der Wirkfläche des Fahrradhalters eine relative Verschiebung der Profile zueinander zulassen (Fig. 17).
Es besteht die Möglichkeit, dass mindestens ein Gabelhalter 2/102 an einem Grundhalter 1 und / oder einem Profilabschnitt 16 verschiebbar und fixierbar ist, nach links und rechts schwenkbar ist und die Spannachse der Fahrradgabel in der Höhe verstellbar ist (Fig. 3).

Zum Spannen und Lösen der Fahrräder mit dem Fahrradträger werden verschiedene Erleichterungen angeboten:
Bei hinterschnittenen Fahrradgabeln ist die optimale Einstellung der Exzenterfixierung durch mehrere Lösungen möglich:
Es kann ein Exzenter 56 für die Fahrradgabel vorgesehen sein mit vergrößertem Spannweg von ca. 5 mm, welcher zur Spannung von hinterschnittenen Fahrradgabeln ausreicht, ohne eine am entgegen gesetzten Ende der Spannachse 21 vorgesehene Spannmutter 22 lösen zu müssen. Dabei ist der Spannexzenter 56 so ausgebildet, dass er nicht bestimmungswidrig in einem Mountainbike verwendet werden kann und hierdurch Unfälle weitestgehend vermeidbar sind (Fig. 6).
Außerdem können zwei handelsübliche Exzenter an den beiden entgegen gesetzten Enden der Spannachse 21 zum Einsatz kommen. Durch den doppelten Exzenterhub sind auch Fahrradgabeln mit Hinterschneidung spannbar (Fig. 7).
Statt der beschriebenen Exzenterspannung kann die Fixiereinrichtung für die Fahrradgabel auch als Kniehebelspannung oder Schraubspanung ausgebildet sein (Fig. 8).

Besonders der Gabelhalter 2/102 lässt sich vielfach verstellen und fixieren. Hierdurch wird die Unterbringung der sperrigen Fahrradlenker im Fahrzeug erheblich erleichtert:
Der Gabelhalter 2/102 kann über einen Nutenstein in einer hinterschnittenen Nut des Grundhalters 1 oder der Profilabschnitte 16 befestigt sein. Der Nutenstein kann eine Bohrung oder einen Gewindestift zur Aufnahme eines Riegelelements 18 für den Gabelhalter aufweisen.
Das Riegelelement kann durch eine Schraube, vorzugsweise eine Rändelschraube oder eine Sternschraube oder bei Verwendung eines Gewindestifts eine Rändelmutter oder eine Sternmutter gebildet sein.
Das Riegelelement kann auch durch einen Exzenter oder einen Kniehebel ausgebildet sein (Fig. 22).
Es ergeben sich besondere Vorteile, wenn die Nutensteine handelsüblicher Bauart sind und wenn sie je nach den gegebenen Anforderungen stirnseitig oder frontseitig in das Profil eingebracht werden können und gegebenenfalls Fixiereinrichtungen aufweisen, welche zur kraftschlüssigen oder formschlüssigen vorübergehenden oder dauerhaften Positionsfixierung in der Nut dienen können (Fig. 9).
Es können weitere Vorteile genutzt werden, wenn auch die Riegelelemente (18) handelsüblicher Bauart sind.

Durch teloskopartige Verschiebung von Grundhalter 1 und Profilabschnitt 81 ergeben sich interessante Lösungen:
Der genannte Verschiebeweg zwischen Grundhalter 1 und Profilabschnitt 81 kann durch mechanische Anschläge 82 gesichert werden; hierdurch kann zusätzlich die ungewollte Demontage der Bauteile verhindert werden.
Durch geeignete Formstücke 81 im Bereich der zu verbindenden Profile, vorzugsweise durch einen Rundstab geeigneten Durchmessers, sind die zu verbindenden Profile in Querrichtung spielfrei formschlüssig verbindbar Auch hier können wahlweise eine Schrauben- Muttern- Kombination, ein Exzenter oder ein Kniehebel als Riegelelement eingesetzt werden.
Ein weiterer Vorteil kann bei der Schrauben- Mutern- Kombination der Einsatz eines verstellbaren Klemmhebels 83 sein, mit welchem die Kerbverzahnung zwischen Hebelgriff und Schraube zur optimalen Einstellung des Hebeigriffs vorübergehend lösbar ist (Fig. 10 und 33).

Mit der Aufteilung des Grundhalters 1 in mehrere Profilabschnitte 33 lässt sich der Fahrradhalter zerlegen und ein handliches Bündel erzeugen:
Die genannten Profilteile 33 können entweder parallel zueinander oder in einem bis 90 Grad beliebigen stufenlos wählbaren Winkel zueinander stehen. Ein besonderer Vorteil ist, dass die Verbindungen von Profilteilen 33 untereinander und daran angebrachten Profilabschnitten 16 durch einen gesonderten Formschluss mittels Verdrehsicherungs- Nutenstein 54 maximale Torsionskräfte übertragen können.
Weiterhin können alle zuvor genanten Verbindungen zwischen Profilteilen 33 und / oder Profilabschnitten 16 durch Lösen nur einer Schraube trennbar und wieder montierbar sein und im getrennten Zustand alle Verbindungsteile unverlierbar mit dem Profilteil (33) oder dem Profilabschnitt (16) verbunden bleiben. Eine vollständige Trennung der formschlüssigen Verbindungen ist nicht erforderlich (Fig. 11).
Es ist besonders vorteilhaft, dass der zerlegte Fahrradhalter nach Anspruch 23 mit den eigenen Elementen zu einem handlichen Bündel verbindbar ist.
Zur Demontage des Fahrradhalters müssen alle erforderlichen Verbindungen zwischen den Bauteilen zur Demontage nur gelöst werden, eine vollständige Trennung der Schrauben- Mutternverbindungen, der Exzenterelemente und der Kniehebelelemente ist nicht erforderlich. Sämtliche Verbindungselemente mit den Profilen 1, mit den Profilabschnitten 16 und mit den Profilteilen bleiben unverlierbar verbunden (Fig. 26).
Zur Bedienung aller zur Zerlegung erforderlichen Verbindungen wird nur ein Montagewerkzeug 34 erforderlich. Dieses Montagewerkzeug ist unverlierbar am Fahrradhalter untergebracht, zum Beispiel in einer Bohrung einer Schutzabdeckung (Fig. 23).
Alle offenen Profilenden von Grundhalter 1, Profilabschnitt 16, Profilteil 33 oder Grundhalter- Verlängerung 80 können mit einer Schutzabdeckung 4/5 versehen sein. Zur besseren Kennzeichnung bestimmter Bauteile können die Schutzabdeckungen verschiedene Farben oder Formen aufweisen. Die Schutzabdeckungen können im Nutenbereich Ausnehmungen aufweisen. Hierdurch wird die Demontage von Profilteilen oder Nutensteinen möglich, ohne dass die Schutzabdeckungen entfernt werden müssen (Fig. 17, 20, 24).

Die vielen verschiedenen Fixiermöglichkeiten im PKW werden durch diverse Erleichterungen unterstützt:
Für die praktische Nutzung der Fixierung des Fahrradhalters im Fahrzeug ist es von erheblichem Vorteil, dass die zu den Nutprofilen zugehörigen Nutensteine an jedem beliebigen Punkt entlang dem Nutenprofil einschwenkbar und fixierbar gestaltet sind (Fig. 15).
Der hakenförmige Zuganker 37 bildet mit den zu belastenden Elementen im Fahrzeug einen Formschluss; hierdurch sind ungewollte Lageänderungen des Zugankers zu den genannten Elementen ausgeschlossen (Fig. 12C). Mindestens eine der Rändelschrauben 15 oder 75 kann durch einen Exzenter oder einen Kniehebel ersetzt werden.
Die Riegelelemente 9/109 können stufenlos an am Grundhalterprofil 1, an den Profilteilen 33 oder den daran befestigten Profilabschnitten 16 verstellt und fixiert werden (Fig. 12 und 13).
Es kann vorteilhaft sein, dass für die Befestigung des Fahrradhalters im Fahrzeug die gleiche Befestigungstechnik wie beim Abdeckrollo des Fahrzeugs Anwendung finden kann und geometrisch vergleichbare Halteelemente möglich sind (Fig. 19).
Der Fahrradhalter kann zur Ableitung der auftretenden Kräfte zusätzlich mit mindestens einem Riegelelement (9) gegen die Ladefläche gespannt werden. Auch hier können die Riegelelemente entweder als Schrauben- Muttern-Kombinationen, als Exzenter oder als Kniehebel ausgebildet sein oder es können mindestens zwei der vorgenannten Techniken kombiniert werden (Fig. 20).
Zusätzlich zum Fahrrad lassen sich die demontierten Fahrradteile Sattel und Vorderrad auf dem Fahrradhalter sicher fixieren:
Der Adapter 67 kann stufenlos am entsprechenden Profil verschoben werden, über eine Achse geschwenkt werden und beide Bewegungen lassen sich gleichzeitig fixieren.
Als Fixierelement können eine Schrauben- Muttern- Kombination, ein Exzenterelement oder ein Kniehebel zur Anwendung kommen (Fig. 27).
Die Sattelhalterung umschließt den Sattelschaft. Durch die im Inneren des Hohlkörpers vorhandenen mindestens drei Formfedern können alle gängigen Sattelschaft- Durchmesser aufgenommen werden. Der Sattel wird werkzeuglos fixiert, der gefettete Sattelschaft wird gegen ungewollte Verschmutzung des Fahrzeugs sicher untergebracht (Fig. 28).

Das Fahrrad-Vorderrad kann nach Anspruch 26 werkzeuglos in dem vorgesehenen genormten Federstecker 166 am Arm 65 aufgenommen und entnommen werden (Fig. 27).

### Bezugszeichenliste

| **Nr.** | **Benennung** | **Anwendung in den Figuren** |
|---|---|---|
| 1 | Grundhalter Der Grundhalter kann aus mindestens zwei Profilteilen (33) zusammengesetzt sein | 1,2,3,10,13,14,15,16, 17,18,20,22,23,24,25 |
| 2 | Gabelhalter | 1,2,4,6,7,20,21,22,23 ,30,31,32 |
| 3 | Spannband für Fahrrad | 1,2,30,31,32 |
| 4 | Schutzabdeckung dunkel | 2,17,20,23,24,26,30, 32 |
| 5 | Schutzabdeckung hell | 2,17,20,23,24,26,30, 32 |
| 6 | Spannband für Vorderrad | 2,30,32 |
| 7 | Zugelement | 18,19,20 |
| 8 | Gummifeder | 18 |
| 9 | Riegelelement für Fahrradhalter an Fahrzeug | 1,2,10,13,17,25,26 |
| 10 | Gewindestange | 18,21,22 |
| 11 | Rollohalterung | 18 |
| 12 | Abdeckmulde | 18 |
| 13 | Auflageprofil | 14,18,20,22 |
| 14 | Nutenstein | 8,9,10,17,22 |
| 15 | Rändelmutter | 3,8,12,13,14,15,17,1 8,20,22,23 |
| 16 | Profilabschnitt | 1,2,3,10,11,13,17,23, 24,25,26 |
| 17 | | |
| 18 | Riegelelement für Gabelhalter (2) an Grundhalter (1) oder an Profilabschnitt (16) oder an Profilteil (33) | 3,10 |
| 19 | | |
| 20 | Exzenter (handelsüblich, Hub ca.2 mm) | 4,7 |
| 21 | Spannachse | 4,5,6,7 |
| 22 | Spannmutter | 4,5,6 |
| 23 | Zwischenstück | 7 |
| 24 | Anlagemutter | 4,6,7 |
| 25 | Hohlachse | 4,5,6,7 |
| 26 | Verstellmutter | 4,5,6,7 |
| 27 | linke Fahrradgabel- Hälfte | 4,5,7 |
| 28 | rechte Fahrradgabel- Hälfte | 4,5,6,7 |
| 29 | Spiralfeder | 4,6,7 |
| 30 | Kegel-Spiralfeder | 4,5 |
| 31 | Einstellschraube | 4,5 |
| 32 | Spiralfeder | 4,5 |
| 33 | Profilteil Mindestens zwei miteinander verbundene Profilteile können einen Grundhalter (1) bilden | 11,26,27,28,29 |
| 34 | Montagewerkzeug | 23 |
| 35 | Ankerblech | 13 |
| 36 | Gewindebolzen für Kindersitzsicherung | 14 |
| 37 | Zuganker | 1,3,12,13,17,24,25 |
| 38 | Kugelkopf | 12,13,17 |
| 39 | Kulissenstein | 17 |
| 40 | | |
| 41 | Verlängerung | 13 |
| 42 | Schraube | 36 |
| 43 | | |
| 44 | Stiftschraube | 17,24 |
| 45 | | |
| 46 | Elastisches Material | 17 |
| 48 | | |
| 49 | | |
| 50 | Kniehebel | 8 |
| 51 | Exzenter | 8 |
| 52 | | |
| 53 | | |
| 54 | Verdrehsicherungs- Nutenstein | 11,23 |
| 55 | Verbindungselemente 90 Grad für Profile (1) und Profilabschnitte (16) | 17,23 |
| 56 | | |
| 57 | | |
| 58 | | |
| 59 | Breite umlegbare Rücksitzlehne | 2,13,25 |
| 60 | Schmale umlegbare Rücksitzlehne | 2,25 |
| 63 | | |
| 64 | Adapter für Schwenkhalter Vorderrad | 27 |
| 65 | Schwenkhalter Vorderrad | 27 |
| 66 | Formfeder Vorderradhalterung | 27 |
| 67 | Adapter für Sattelhalter | 28 |
| 68 | Formfeder | 28 |
| 69 | Gummistift | 27 |
| 70 | Sattelaufnahme | 28 |
| 71 | | |
| 72 | | |
| 73 | Riegelelement Für Adapter (64) und (65) mit Grundhalter (1) oder Profilabschnitt (16) | 27 |
| 74 | Zuganker | 27,28 |
| 75 | | |
| 78 | Verlängerung verstellbar 0 bis 90 Grad | 11 |
| 78.1 | Querstück | 11 |
| 78.2 | Gewindestift | 11 |
| 78.3 | Anker | 11 |
| 79 | Verbindungselement schräg für Profilteil Grundhalter | 23 |
| 80 | Grundhalter-Verlängerung | 10 |
| 81 | Formstück | 10 |
| 82 | Nutenstein-Anschlag | 10 |
| 83 | Verstellbarer Spannhebel handelsüblich | 10 |
| 84 | Riegelelement für Grundhalter-Verlängerung (80) an Grundhalter (1) | 10 |
| 85 | Halter Kopfstützenaufnahme | 35 |
| 86 | Halteklammer | 35 |
| 87 | Halter Kopfstütze | 35 |
| 88 | Verschlussglied | 35 |
| | | |
| | | |
| 102 | Gabelhalter | 3,4,6,7,10,26 |
| | | |
| 109 | Riegelelement für Fahrradhalter an Fahrzeug | 10,17,25 |
| | | |
| 120 | Exzenter mit vergrößertem Hub ca. 5 mm | 6 |
| 121 | Spannachse kurz | 7 |
| | | |
| 137 | Zuganker | 14 |
| 138 | | |
| 139 | Kulissenstein | 17 |
| | | |
| 181 | Formstück | 10 |
| 209 | Riegelelement für Fahrradhalter an Fahrzeug | 24,25 |
| 221 | Spannachse verklebt | 7 |
| 237 | Zuganker | 17 |
| 281 | Formstück | 10 |
| 309 | Riegelelement für Fahrradhalter an Fahrzeug | 24,25 |
| 381 | Formstück | 33 |
| 409 | Riegelelement für Fahrradhalter an Fahrzeug | 36 |
| 481 | Formstück | 33 |

## Patentansprüche

1. Fahrradhalter für den Innenraum eines Fahrzeugs wobei der Fahrradhalter mindestens einen Gabelhalter (2) aufweist, welcher mindestens eine der beiden Augen der Fahrradgabel aufnimmt und fixiert, der Fahrradhalter im Bereich der Ladefläche platzierbar und der Gabelhalter (2) an einem aus einem Profil bestehenden Grundhalter (1) fixierbar ist,
**dadurch gekennzeichnet, dass** der Gabelhalter (2) so ausgebildet ist, dass die Spannachse für die Fahrradgabel um einen Winkel nach links und rechts gegenüber der Längsachse des Grundhalters (1) verstellbar und fixierbar ist und der Grundhalter (1) zur Ableitung der auftretenden Kräfte zusätzlich mit mindestens einem Riegelelement (9, 109) gegen die Ladefläche spannbar ist.

2. Fahrradhalter nach Anspruch 1, **dadurch gekennzeichnet, dass** der Gabelhalter (2) in Längsrichtung des Grundhalters (1) stufenlos verstellbar und fixierbar ist.

3. Fahrradhalter nach Anspruch 1 oder 2, **dadurch gekennzeichnet, dass** der Grundhalter (1) ausgelegt ist, um wahlweise an verschiedenen, serienmäßig in einem Fahrzeug vorhandenen Elementen auf der Ladefläche des Fahrzeugs befestigbar zu sein, wobei vorzugsweise mindestens eine zusätzliche Verbindungseinrichtung (3) vorgesehen ist, bspw. In Form eines Spannbands, welches zwischen einer geeigneten Position am Fahrrad, zum Beispiel ein Punkt im hinteren Bereich des montierten Hinterrads, etwa in Höhe der Achse, und einem Punkt im Fahrzeuginnenraum, vorzugsweise mindestens einer Verzurröse in Höhe des Ladebodens, spannbar ist.

4. Fahrradhalter nach einem der vorhergehenden Ansprüche, **dadurch gekennzeichnet, dass** am genannten Profil des Grundhalters (1) mindestens ein Profilabschnitt (16) in beliebiger Winkellage anbringbar ist zur Fixierung des Grundhalters (1) im Fahrzeug an Punkten, welche außerhalb des Querschnitts des erstgenannten Profils liegen.

5. Fahrradhalter nach Anspruch 4 **dadurch gekennzeichnet dass** der Gabelhalter (2, 102) so montierbar sind, dass die Achsmitten der Fahrradgabeln in Fahrtrichtung des Fahrzeugs stufenlos verstellbar und fixierbar sind und vorzugsweise in vertikaler Richtung in mindestens zwei unterschiedlichen Positionen fixierbar ist.

6. Fahrradhalter nach einem der vorhergehenden Ansprüche **dadurch gekennzeichnet, dass** die innere Breite der Gabelhalter (2, 102) durch Verstellung einer Mutter (26) werkzeuglos feineinstellbar und nachstellbar ist und gegebenenfalls eine Sicherung zur Beibehaltung der gewählten Einstellung vorgesehen ist.

7. Fahrradhalter nach einem der vorhergehenden Ansprüche **dadurch gekennzeichnet, dass** ein Exzenter (120) oder Kniehebel mit vergrößertem Spannhub vorgesehen ist, mit welcher die optimale Einstellung der Fixierung beziehungsweise der optimale Druckpunkt der Fixierung auch für hinterschnittene Fahrradgabeln werkzeuglos einstellbar ist und gegebenenfalls eine Sicherung zur Beibehaltung der gewählten Einstellung vorgesehen ist.

8. Fahrradhalter nach einem der vorher genannten Ansprüche **dadurch gekennzeichnet, dass** mindestens ein Profilabschnitt (80) parallel zum Grundhalter positioniert ist, in Längsrichtung am Profil des Grundhalters (1) verschiebbar ist und vorzugsweise zwischen zwei Positionen stufenlos verstellbar und fixierbar ist.

9. Fahrradhalter nach einem der vorher genannten Ansprüche **dadurch gekennzeichnet, dass** der Grundhalter (1) in seiner Länge aus mindestens zwei Profilteilen (33) besteht, welche stirnseitig kraft- und formschlüssig verbindbar und jederzeit lösbar sind.

10. Fahrradhalter nach einem der vorher genannten Ansprüche **dadurch gekennzeichnet, dass** er ausgelegt ist zur Befestigung an einem Sicherheits-Einrastmechanismus für die hochgeklappte Rücksitzlehne, welche in umgeklappter Stellung der Rücksitzlehne unter der Ladefläche der Rücksitzlehne platziert ist.

11. Fahrradhalter nach einem der vorher genannten Ansprüche **dadurch gekennzeichnet, dass** er an mindestens einer serienmäßig vorhandenen Verzurröse des Fahrzeugs befestigbar ist.

12. Fahrradhalter nach einem der vorher genannten Ansprüche **dadurch gekennzeichnet, dass** er an mindestens einer unter der Ladefläche versenkten Halterung befestigbar ist.

13. Fahrradhalter nach einem der vorher genannten Ansprüche **dadurch gekennzeichnet, dass** er an so genannten Kindersitzsicherungen befestigbar ist, welche auf der Oberfläche mindestens einer umgelegten Rücksitzlehne platziert sind.

14. Fahrradhalter nach einem der vorher genannten Ansprüche **dadurch gekennzeichnet, dass** er ausgelegt ist zur Fixierung an Nutprofilen, welche serienmäßig im Laderaum des Fahrzeugs vorgesehen sind.

15. Fahrradhalter nach einem der vorher genannten Ansprüche **dadurch gekennzeichnet, dass** er an Einrichtungen (35) befestigbar ist, welche nachträglich mit geeigneten Vebindungselementen im Ladebodenbereich des Fahrzeugs fixierbar sind.

16. Fahrradhalter nach einem der vorher genannten Ansprüche **dadurch gekennzeichnet, dass** der Fahrradhalter in Fahrtrichtung gesehen hinter einem auf der umgelegten Rücksitzlehne fixiertes Rollo für die Abtrennung des Laderaums positioniert ist und die Funktion des Rollo nicht behindert.

17. Fahrradhalter nach einem der vorher genannten Ansprüche **dadurch gekennzeichnet, dass** für seine Fixierung am Ladeboden (des Fahrzeugs) ein Zuganker (74) vorgesehen ist, welcher um seine Achse schwenkbar ist und anschließend in Längsrichtung seiner Achse durch ein Riegelelement (9, 109) bewegbar ist.

18. Fahrradhalter nach einem der vorher genannten Ansprüche **dadurch gekennzeichnet, dass** für seine Fixierung am Ladeboden des Fahrzeugs ein hakenförmiger Zuganker (37) mit einem Zugelement (40) vorgesehen ist, dass der Haken radial um 360 Grad stufenlos verstellbar und fixierbar und zusätzlich der Haken axial in seiner Lage zur Hakenführung (39) stufenlos verstellbar und fixierbar ist.

19. Fahrradhalter nach Anspruch 10 **dadurch gekennzeichnet, dass** der Sicherheits-Einrastmechanismus der umlegbaren Sitzbänke des Fahrzeugs durch Druck auf den Zuganker ausgelöst wird und hierzu in Verlängerung des hakenförmigen Zugankers ein geeignetes von Hand betätigbares Druckelement (38) angeordnet ist, beispielsweise ein Kugelkopf.

20. Fahrradhalter nach einem der vorher genannten Ansprüche **dadurch gekennzeichnet, dass** der als längliches Profil ausgebildete Grundhalter (1) ausgelegt ist um in serienmäßig vorhandenen, auf der Rückseite der umlegbaren Rücksitzbank vorgesehenen Fixier-Elementen für ein Abdeckrollo des Laderaums fixierbar zu sein.

21. Fahrradhalter nach einem der vorher genannten Ansprüche **dadurch gekennzeichnet, dass** er ausgelegt ist zur Befestigung an mindestens einer Kopfstütze mindestens einer umgelegten Rücksitzlehne.

22. Fahrradhalter nach einem der vorher genannten Ansprüche **dadurch gekennzeichnet, dass** er an mindestens einer Kopfstützenaufnahme mindestens eines umlegbaren Kopfstützenaufnahme befestigbar ist.

23. Fahrradhalter nach einem der vorher genannten Ansprüche **dadurch gekennzeichnet, dass** für seine Befestigung im Fahrzeug- Innenraum mindestens eine Kombination von zwei Methoden zur Anwendung kommen.

24. Fahrradhalter nach einem der vorher genannten Ansprüche **dadurch gekennzeichnet, dass** der Fahrradhalter in seiner ganzen Abmessung in einer vorgesehenen Ablagestelle im Fahrzeug aufbewahrbar ist, bevorzugt unter dem Ladeboden des Fahrzeugs

25. Fahrradhalter nach den vorgenannten Ansprüchen **dadurch gekennzeichnet, dass** der Fahrradhalter in handliche Einzelteile zerlegbar ist und in einer vorgesehenen Ablagestelle im Fahrzeug aufbewahrbar ist, bevorzugt unter dem Ladeboden des Fahrzeugs

26. Fahrradhalter nach einem der vorgenannten Ansprüche **dadurch gekennzeichnet, dass** am Profil des Grundhalters oder einem der am Grundhalter befestigten Profilabschnitte ein oder mehrere zusätzliche Adapter (64) oder (67) befestigbar sind.

27. Fahrradhalter nach Anspruch 24 **dadurch gekennzeichnet, dass** der Adapter (67) ausgelegt ist, um eine Sattelhalterung (68) aufzunehmen.

28. Fahrradhalter nach einem der Ansprüche 24 oder 25 **dadurch gekennzeichnet, dass** der Adapter (64) geeignet ist zur Aufnahme einer Vorderradhalterung (65).

29. Fahrzeug mit einem für seinen Innenraum geeigneten Fahrradhalter, welcher nach einem der vorgenannten Ansprüche ausgestattet ist.

30. Fahrzeug mit einem für seinen Innenraum geeigneten Fahrradhalter nach einem der Ansprüche 10 bis 15 oder Anspruch 20, wobei der Fahrradhalter
**dadurch gekennzeichnet ist, dass** die Punkte zur Befestigung im FahrzeugInnenraum nicht symmetrisch zu den Außenabmessungen des Grundhalters (1) positioniert sind, dass in einer ersten Stellung des Fahrrradhalters im Fahrzeug mindestens ein Fahrrad transportierbar ist und in einer zweiten, zur ersten Stellung um 180 Grad verdrehten Stellung mindestens zwei Fahrräder transportierbar sind, wobei die Gabelhalter (2) in beiden Stellungen vorzugsweise die gleiche Position zum Grundhalter haben.
